(19) Europäisches Patentamt

European Patent Office

Office européen des brevets

(11) **EP 1 662 218 A1**

(12) **EUROPEAN PATENT APPLICATION**
published in accordance with Art. 158(3) EPC

(43) Date of publication:
**31.05.2006 Bulletin 2006/22**

(51) Int Cl.:
*F25D 31/00* (1968.09)       *A23L 3/36* (1968.09)
*A23L 2/42* (1995.01)

(21) Application number: **04742060.9**

(22) Date of filing: **13.07.2004**

(86) International application number:
**PCT/ES2004/000332**

(87) International publication number:
**WO 2005/010448 (03.02.2005 Gazette 2005/05)**

(84) Designated Contracting States:
**AT BE BG CH CY CZ DE DK EE ES FI FR GB GR
HU IE IT LI LU MC NL PL PT RO SE SI SK TR**

(30) Priority: **23.07.2003 ES 200301733**

(71) Applicant: **CONDE HINOJOSA, Jose Ramon
41004 Sevilla (ES)**

(72) Inventor: **CONDE HINOJOSA, Jose Ramon
41004 Sevilla (ES)**

(74) Representative: **Carpintero Lopez, Francisco et al
Herrero & Asociados, S.L.,
Alcalá, 35
28014 Madrid (ES)**

(54) **METHOD AND DEVICE FOR THE RAPID COOLING OF PACKAGED DRINKS**

(57)    Based on the use of a coolant aqueous liquid, usually brine, maintained at low temperature in a reservoir receptacle, as low as -20° C if the brine is of Sodium chloride or as low as -50° C if it is of Calcium chloride, applied on the upper surface of the container, positioned horizontally, rotating about its axis, by means of soft jets, during a time which is calculated from the initial and desired temperatures, the temperatures of the cold solution and of the rinsing water and from the temporal coefficient of the packaged beverage, so that the brine glides over its surface drawn by the force of gravity, surrounding it completely through surface tension adherence to the surface of the container located underneath, where it is detached, determining at all times that the brine coats the greater part of the container during the spraying.

By substituting the coolant liquid with hot water the rapid heating of packaged beverages is produced.

FIG. 5

EP 1 662 218 A1

**Description**

**OBJECT OF THE INVENTION**

The present invention relates to a procedure and apparatus for rapid cooling of beverages packaged in can or bottle type containers, which is based fundamentally on storing brine or another aqueous solution and chilling it to a temperature proximate to its freezing point in a reservoir receptacle and spraying it onto the packaged beverage while it rotates about its axis, for a time that is calculated from the initial and desired temperatures, the temperatures of the cold solution and of the rinsing water and of the temporal coefficient of the packaged beverage, returning the cold solution to the reservoir.

An object of the invention is a procedure of deducing the temporal coefficient of the packaged beverage from the initial temperature of the beverage, the temperature of the cooling aqueous liquid and of the equilibrium temperature of the beverage and its container during a stoppage of the cooling, calculated from measuring in three successive instants the temperature developing on the surface of the container.

The temporal coefficient is necessary for calculating the duration of the cooling. It depends on several factors: temporal measurement unit, design of the container, material, thickness and nature of its surfaces, beverage volume, specific heat of the same, viscosity, tangential rotational speed of the container, free gas in the container, specific heat of the cooling liquid, its viscosity and flow rate used during the cooling.

It likewise constitutes an object of the invention that the rapid cooling apparatus employed has means which facilitate the rotation of the can or bottle type containers to be cooled forcing turbulence on the interior and also that it incorporates means of rinsing the container when cooled for the removal of the brine or cooling solution adhering to the surface.

It is an object of the invention to establish a specific form of locating the reservoir and the type of spray for cooling over the containers.

It is also an object of the invention the application of the procedures and apparatus cited for heating beverages by means of the spraying of hot water or another hot fluid on the containers in rotation.

It also constitutes an object of the invention that the rapid cooling apparatus employed has means which facilitate the cooling of the containers of any type which cannot rotate as well as the freezing of foodstuffs packaged in hermetic bags.

**BACKGROUND OF THE INVENTION**

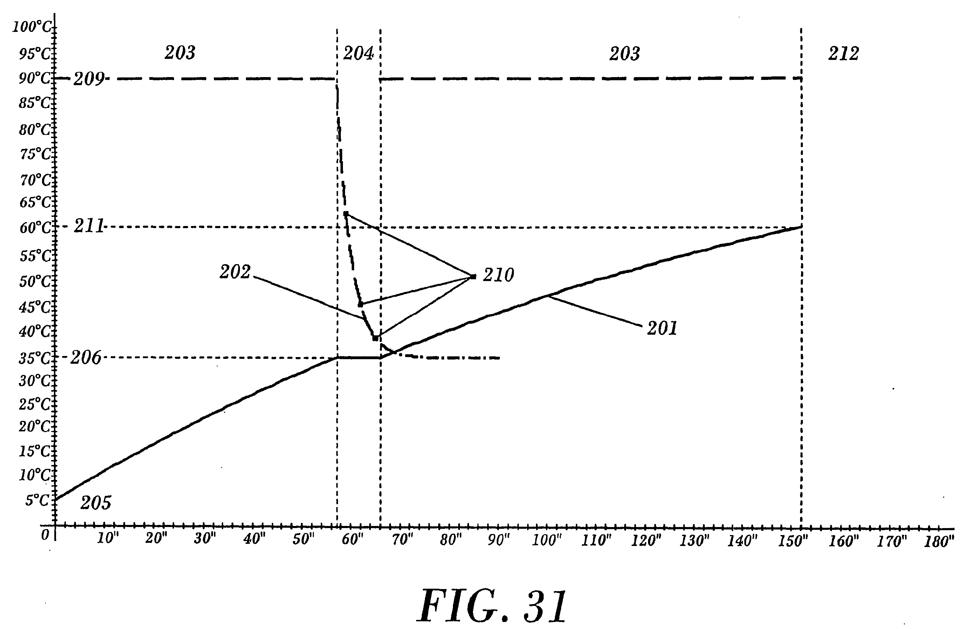

The transition point for CaCl2 dissolved in water is 0.2985 mass fraction and -54.23° C. Higher concentrations crystallize part of the CaCl2 in the form of CaCl2 6(H2O) and lower concentrations freeze water to reach the equilibrium concentration. The behaviour of the solution is seen in Figure 31.

The mean specific heat of the solution is 0.669 cal/g equivalent to 0.853 cal/cm3.

In cooling from 0° C to -40° C, 34.12 cal/cm3 is extracted.

To lower one cm3 of water from +0° C to -40° C signifies the extraction of about 100 calories. This is three times the previous value.

Ice is difficult to use for transferring cold rapidly and in a controlled manner to a packaged beverage.

The quantity of cooling calories storable per unit volume of brine without freezing is much less than that of ice. Moreover it is not possible to maintain a uniform temperature by supplying cold since no phase change takes place. Its advantage is in the capacity to transfer cooling calories rapidly since the brine is in the liquid state.

It is possible to store cold using a brine, of CaCl2 or NaCl, or an aqueous solution of glycol, in a reservoir provided with an evaporator of chilling fluid, usually a coiled tube, connected to a refrigerator compressor.

The use of a cold accumulator with brine or another aqueous solution (without ice) is to be found in numerous patents, but with the solution always remaining separate from the product to be cooled with a membrane and without consumption of the solution used as observed in the patents US-2061427 and US-5557943 among others.

Chilling with a very cold solution, usually brine, has been employed for a long time, for example for freezing fish. First immersion was used and then spraying with brine.

On spraying, see for example the patents: DE-335871 and US-1468050.

Work has also been done on freezing diverse products by immersion in very cold brine, usually of Sodium chloride, at -20° C. To avoid contact of the food with the brine a fine impermeable bag is used from which it is convenient to extract the air to allow a better contact, through the bag with the cooling liquid. The system is employed industrially for example to freeze chickens. The bag also allows the use of Calcium chloride or solutions of propylenglycol, etc.

To cool cans of foodstuffs, fundamentally to lower the temperature after sterilization or pasteurisation, the system of spraying with water is used, generally at ambient temperature, with simultaneous rotation of the container which is displaced under the sprays.

The rotation of the containers to augment the interior turbulence using horizontal rollers is to be found for example in the patent US-4164851.

The patent of invention US-5505054 relates to a rapid cooling apparatus of in canned or bottled beverages which incorporates a system of spraying cold water in the range of 0° to 5° C which projects from one or more nozzles a flow rate of at least 20 litres per minute onto the surface of the container to be cooled whilst the container disposed in a horizontal position turns at speeds of between 200 and 500 r.p.m.

In this apparatus due to the use of cold water at temperatures greater than 0° C, when it is attempted to reduce the temperature of the container to temperatures of the order of 5° C, the application of substantial flow rates is required to avoid splashing and that the container rotate at a high speed to accelerate the cooling process.

It is further pointed out that the container rotates about its horizontal axis by the action of two rollers which are longer than the length of the container and which define a line of continuous contact which impedes the circulation of the cooling liquid over the lower part of the container situated between the two rollers.

In addition this apparatus requires a reservoir in which the temperature of the water is maintained since the liquid and ice phases are present, and it has means which prevent the discharging of ice through the pumps which direct the water, at a temperature between 0° C and 5° C, toward the nozzles.

In this patent the use of brine is explicitly rejected for the impregnation of the container with salt. The system also has the problem that since the spraying time control is not well designed, if a very cold solution were used undesired freezing could take place.

The use of ice and water is to be found in other patents for cooling beverages, some of them with rotation of the container in vertical or inclined position as in the patent US-6314751.

These systems with ice and water mixture have the drawback that when it is attempted to cool beverages to a temperature near to 0° C the time used becomes very long meaning their use has no utility for this application. Evidently and as is deduced by logic, these apparatus do not allow freezing of the products due to the range of temperatures in which the cooling liquid works.

Figure 27 is a graphical comparison of the system proposed with those of the patents US-5505054, which uses water with ice at 0° C, and US-5557943, which uses a glycol solution at -24° C. The comparison is made by observing the development in time of the temperature of a 33 cl can of refreshment using the system proposed with brine at -40° C, -30° C and -20° C as well as those proposed by the cited patents.

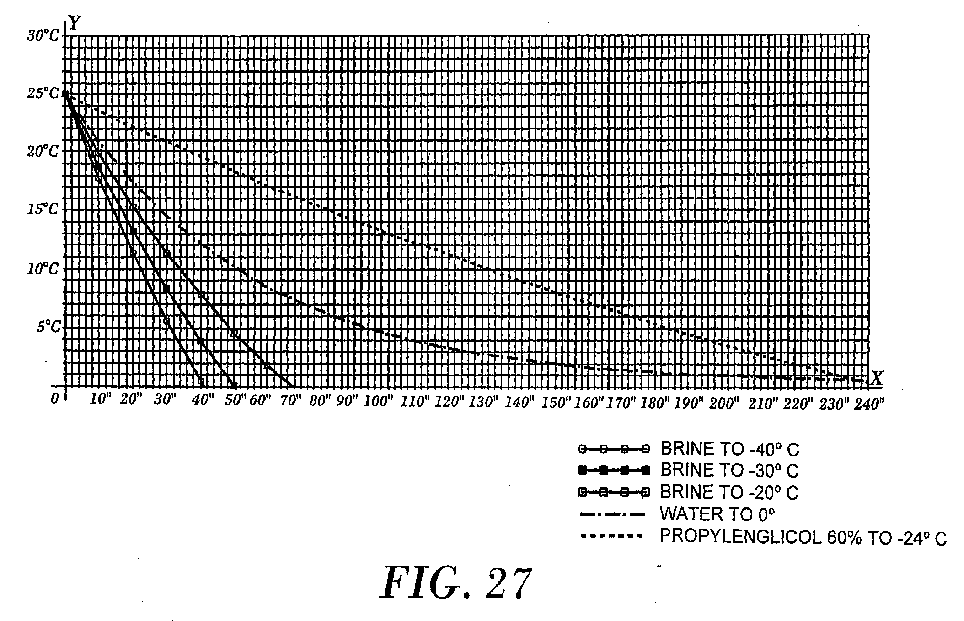

It is observed in the graph of Figure 27 that the cooling proposed in the present invention is much more rapid than the application of that to be found in the patents cited. It is also seen that the curve of the patent US-5505054 does not traverse the abscissa of 0° C.

## DESCRIPTION OF THE INVENTION

The procedure and apparatus used for rapid cooling of packaged beverages, which constitute the object of the present invention are based on the use of a coolant aqueous liquid, usually brine, which is maintained at low temperature in a reservoir receptacle, as low as -20° C if the brine is of Sodium chloride or -50° C if it is of Calcium chloride, and applied on the containers by means of soft jets on the upper part of the surface of the container to be cooled positioned horizontally during a certain time, all this in such way that the brine glides over the rest of its surface drawn by the force of gravity, making a complete turn by adherence through surface tension to the surface of the container located underneath from where it is released, determining at all times that the brine coats the greater part of the container during the spraying action. It is pointed out that as a consequence of the gentle spraying of the jets there is no splashing, which means the system is comfortable to use and also since the flow rate is low the pipes are correspondingly of reduced diameter and the electric pump required low-powered.

If the containers are subjected to a rotation around their axis, a forced convection is achieved in their interior, greatly enhancing the thermal transfer. A tangential velocity of the wall of the container can be considered reasonable up to 67 cm/s, equivalent for a container in the form of a normal can, the radius of which is 3.2 cm, to an approximate rotation of 200 r.p.m. producing a centrifugal acceleration of 14 m/s2. The centrifugal acceleration in the proximity of the wall increases quadratically with speed, so that if at 200 r.p.m. the acceleration for the type of can cited is 14 m/s2, at 350 revolutions per minute that acceleration is 43 m/s2. The brine tends to separate from the container at a high number of revolutions, making the transfer on the external face difficult and splashing the surroundings, for which reason a high rotational speed with low flow rate is not recommendable, although with abundant cooling liquid splashing is avoided and the transfer coefficient obtained is greater.

With containers of greater radius it is possible to work with a higher tangential velocity: for example a two-litre container with a radius of 5 cm can rotate at 160 r.p.m. which produces a centrifugal acceleration of 14 m/s2 with a tangential velocity of about 84 cm/s.

In the event of not incorporating the tangential velocity as a variable, it is reasonable to use 65 cm/s. Higher speeds can produce instability in the positioning of the containers, fundamentally in cans, and splashing.

If there were no air or gas inside the container, that is its content were only liquid, it would be necessary to rotate alternately in both directions to maintain the turbulence high.

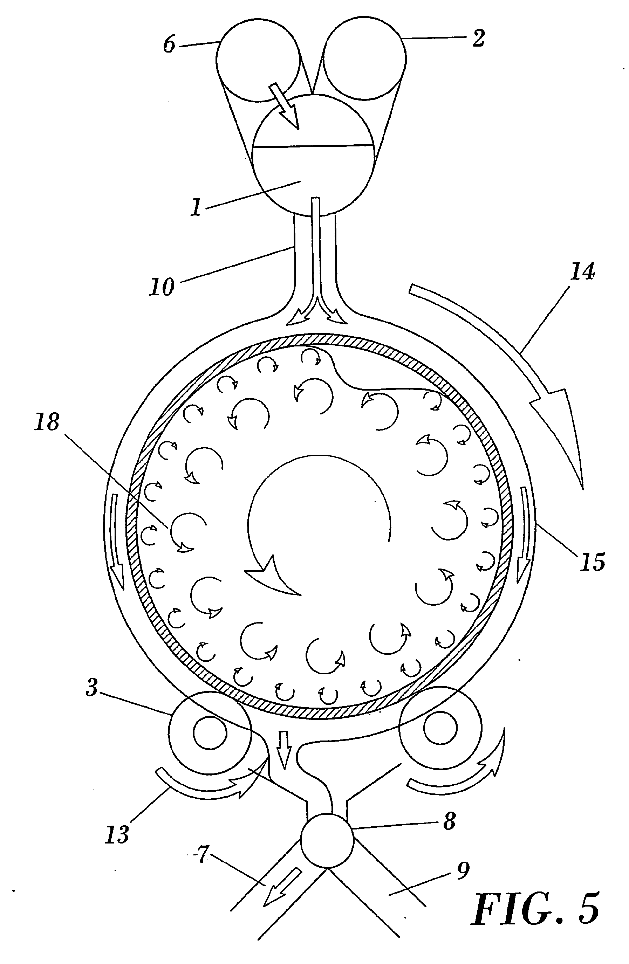

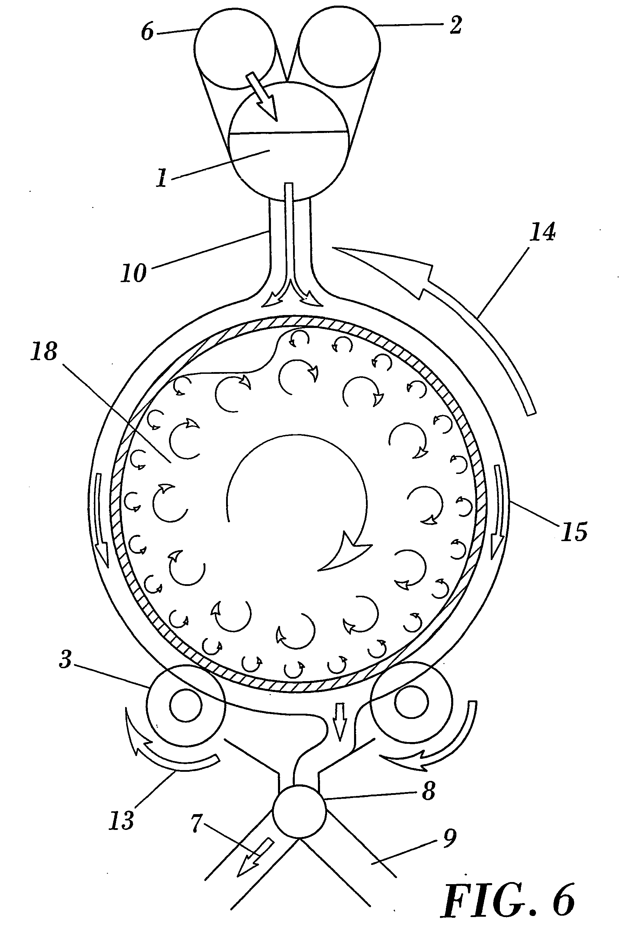

If air or gas is present, which is the normal case, rotation can be in a single direction because the gas is positioned in the upper part of the container forming with the beverage a kind of wave which breaks the layer in contact with the wall as indicated in figures 5 and 6.

Clearly, rotating the container is not the same as shaking the liquid violently, for which reason the effect obtained by shaking a bottle of beer or sparkling beverage before opening it should not occur. In the tests carried out with beers and refreshments with carbonic gas, foam was only formed when partial freezing had taken place.

The containers rotate around their axis located on two parallel axles which have a plurality of integral elements, such as conveniently spaced annular projections or similar, on the outside edges of which the container is supported. The brine can flow between the annular projections, surrounding the whole container and remaining adhered to the same by the surface tension, and although some of the brine or cooling liquid escapes through the annular projections, the cited assembly minimizes the losses and achieves a cooling superior to that obtained in other devices which employ continuous cylinders as elements for support and rotation.

It is envisaged that one of the axles be powered and the other one free or that both are powered integral with a single motor. In the first case the turning of a powered axle defines the rotation of the container, which in turn makes the other axle rotate. The axles have to rotate simultaneously in the same direction.

To maintain the position of the container during the cooling, the plane formed by the two parallel axles is horizontal or slightly inclined toward one end of the axles and is terminated in some butts which impede the displacement of the container during the rotation thereof.

To cool liquids in containers subjected to rotation, the possibility is envisaged of using a single brine jet per container or several jets per container arranged in a same line in slightly separated positions, the discharged brine having to extend over the greater part of the surface of the container.

The flow rate for three normal cans or a bottle of up to three litres can be between 10 and 20 litres per minute. No important differences have been observed in the cooling produced between the two flow rates.

When the beverage has been cooled the container is washed by spraying with rinsing water, with an independent spray or with the same one used for the brine, which will remove the brine residue that could remain on the surface of the container while this continues rotating. This rinsing can be done with water from the domestic supply or with refrigerated water obtained by cooling with any conventional method.

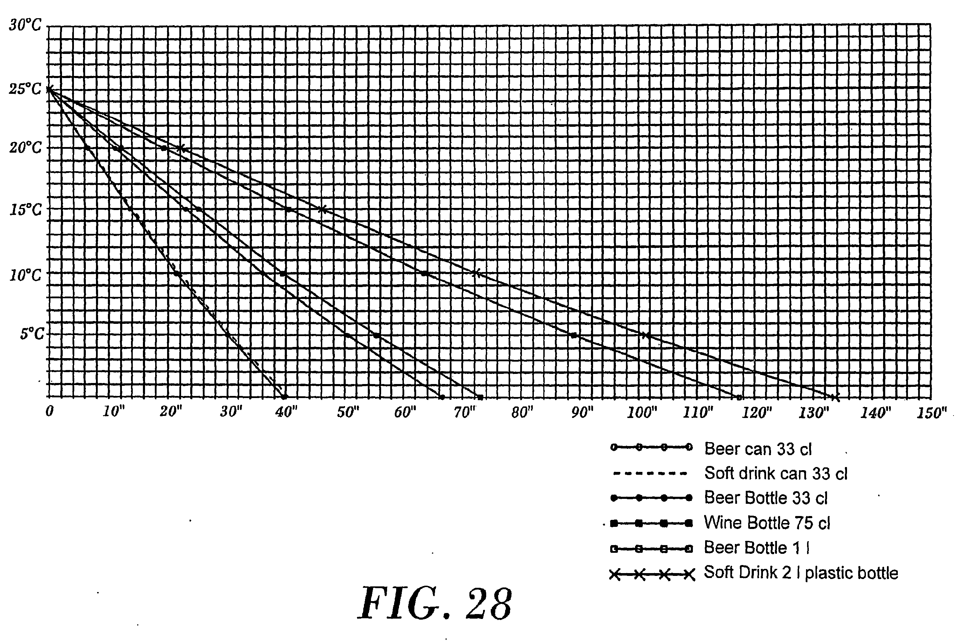

In the graph of Figure 28 the thermal behaviour is shown of different beverages packaged in different types of container on appiying the invented procedure thereto, using brine at -40° C and a tangential velocity of 65 cm/s.

Beer and soda cans describe an almost identical curve, their behaviour being explained because the only factor that varies, in thermal terms is, slightly, the specific heat of the content, which is somewhat smaller in beer.

Other beverages take longer to attain the same temperature as the cans, being very different for all of them in the examples shown.

It is clearly deduced that it is necessary to calculate the time for each case and control the process automatically to attain the temperatures sought with reasonable precision. It is explained hereunder how this problem has been resolved in the invention.

An electronic unit will be used formed by a microprocessor, with memories, a data input/output system, an analogue/digital converter, a keyboard of any type, monitor or another system for communication with the user, etc., which will be termed CPU or microprocessor. It will acquire the temperature data coming from different sensors, digitising them if necessary, it will store the operating programs, it will accept the data from the manual input, be it a keyboard or any other, and finally it will give instructions to the solenoid valves and the motors.

When a rotating packaged beverage is sprayed, it can be considered that the external surface of the container acquires the cooling liquid temperature and the internal that of the beverage. During the cooling process, the external temperature is kept constant and the internal gradually falls. When the spray of cold brine is cut off, the external surface warms rapidly through the contribution of heat from the beverage which is inside the container until reaching an equilibrium temperature between the beverage, its container and the fine brine layer which could be adhering to the surface. This occurrence is the basis of the process which is explained below and which is claimed in the patent.

The duration of the transfer of cold or heat between the spray and the packaged beverage are inversely proportional to the temperature difference

$$dS = dT / (T-Ts)$$

Where S is the time, T and Ts are the temperatures of the beverage and of the brine.

If Ts is considered constant then integrating between Ti and Tf, the duration of the cooling is obtained:

$$Sf = K \times Ln \left( (Ti - Ts) / (Tf - Ts) \right)$$

Where:

Sf = Duration of the cooling to achieved the desired temperature Tf
Ts = Temperature of the brine
Ti = Initial temperature of the beverage
Tf = Final temperature of the beverage
K = characteristic temporal coefficient of the beverage and the equipment
K = CC / CT
CC = Heat capacity of the beverage with container included
CT = Overall transfer coefficient of the container which depends on the material and design of the container, thickness, rotational speed and viscosity of the content, etc. and of the temporal unit of measurement.

The brine warms during the cooling, and if
Tfs = Final temperature of the brine, then

$$Tfs = Ts + CC \times (Ti.\ Tf) / CCS$$

In practical terms since CCS, heat capacity of the brine, has to be much greater than CC, heat capacity of the beverage, it is acceptable that:

$$Tfs = Ts$$

Inside the area of normal cooling, with a volume of brine reasonably greater than the volume of the beverage to be cooled, the errors are very small, being possible to deem negligible if it is considered that the brine does not vary homogeneously in temperature during cooling, that is, if the brine at the bottom of the tank is extracted, without stirring it simultaneously, the temperature does not rise appreciably from that which results from the effect of the somewhat warmer return after spraying the container. When the cooling is finished it is convenient to start the agitator to homogenize the brine before the following cooling.

Since Ti, Tf and Ts are known, it is only necessary to determine K.

If the equilibrium temperature Tp during the cooling process of the beverage and the container is found at Sp seconds from the beginning and the initial temperature of the beverage and the temperature of the brine are known, the temporal coefficient K can be determined:

$$Sp = K \times Ln \left( (Ti - Ts) / (Tp - Ts) \right),$$

whence the value of K is deduced

$$K = Sp / Ln \left( (Ti - Ts) / (Tp - Ts) \right)$$

and, knowing K the total duration of the spraying to reach the desired temperature Tf can be calculated

$$Sf = K \times Ln \left( (Ti - Ts) / (Tf - Ts) \right)$$

$$Remaining\ time = Sr = Sf - Sp$$

Tp = Equilibrium temperature in the stoppage
Sp = cooling time elapsed until the stoppage

The invention recommends proceeding in the following way:

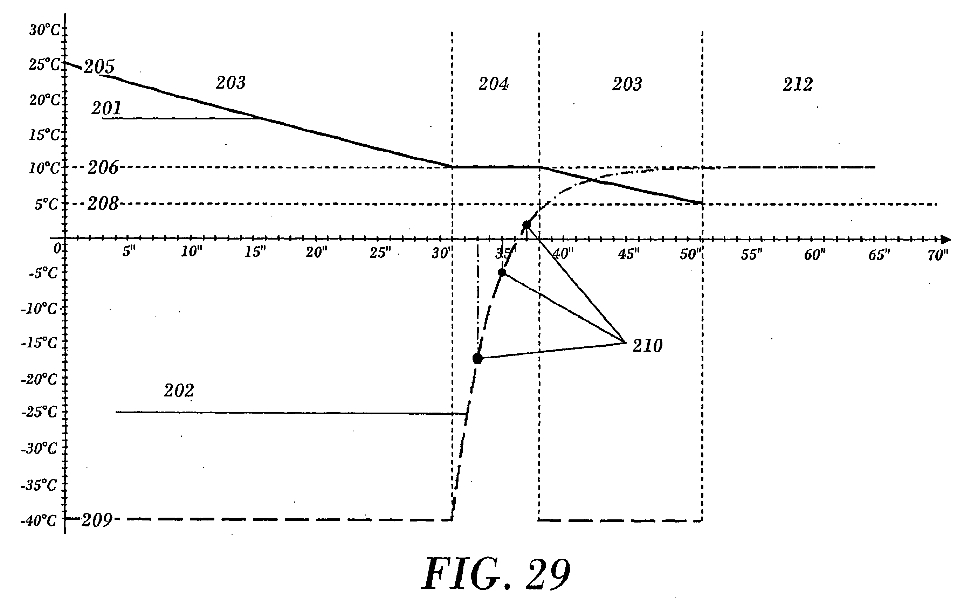

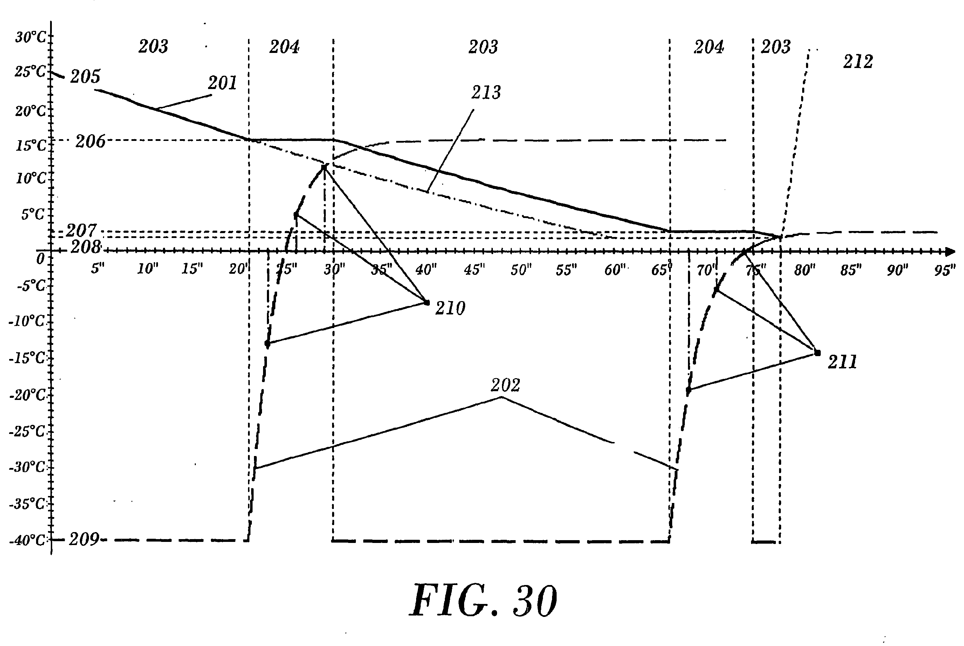

The process which is explained next can be seen in Figures 29 and 30 which show a diagram wherein the ordinates indicate the temperature and the abscissas the time of the behaviours of the mean temperature of the beverage and the container (201) starting from an initial temperature (205) and seeking a final one (208) without showing the rinsing to simplify the same.

In Figure 29 a single stoppage of the spray (204) and two spray phases (203) and the final stoppage (212) are shown, the mean temperature being in the stoppage (206). The line (202) indicates the surface temperature of the container during the cooling process, it being observed that during the spray phases it is the same as the temperature of the brine (209) and that in the stoppage it rises rapidly toward the equilibrium temperature (206). During the rise and within the stoppage zone three temperature readings of the surface (210) are taken, the first separated from the second and the latter from the third by the same time.

In Figure 30 two stoppages of the spray (204) are shown and three spray phases (203) and the final stoppage (212), the mean temperatures being in the stoppages (206) and (207). The line (202) indicates the surface temperature of the container during the cooling process, it being observed that it is equal to the temperature of the brine (209) during the spray phases and that in the stoppages it rises rapidly toward the equilibrium temperature (206) or (207). During the rise and within each of the stoppage zones three readings are taken of the temperature on the surface (210), the first separated from the second and the latter from the third by the same time. The line (213) shows the mean temperature of the container and the beverage if there were no stoppages, it being seen that the desired temperature (208) is attained somewhat earlier. It will be seen how this saving in time can be achieved with beverages already known.

The determination of the temperature after Sp seconds have elapsed from the beginning of the cooling process can be done in the following way:

The spray time until the stoppage is calculated with

$$Sp = Kbase \times Ln\ ((Ti\text{-}Ts)\ /\ (Tf\text{-}Ts))$$

where Kbase = the temporal coefficient of a theoretical packaged beverage which is cooled or warmed very rapidly.

After the calculated time Sp has elapsed, the brine spray is cut off and the rotation of the container is maintained.

It can be considered that, in the initial instant after the stoppage, the surface of the container has the temperature of the brine and its inner face which is in contact with the beverage in high turbulence, has the temperature of the beverage.

Since the surface ceases to be in contact with renewed, cold brine the temperature begins to rise rapidly in accordance with the following equation:

$$Time = Kenvase \times Ln\ ((Ts\text{-}Tp)\ /\ (T\text{-}Tp))$$

The variables are the Time and the temperature T of the surface

The value of the temporal coefficient Kenvase is unknown.

It is necessary to know Tp which is the equilibrium temperature in the stoppage, that is to say the temperature at which the beverage and its container would stabilize if there were no more exchanges with the exterior.

At a preset time, Sgoteo = 2 seconds (or another value) so that there is no dripping, the surface temperature of the container T1 is measured with a contact-free sensor (IR or equivalent).

At a preset time, X = 3 seconds (or another value), the temperature, T2 is measured again.

The same interval X is again allowed to elapse and the temperature, T3 is measured for a third and final time.

Three points have been obtained on the heating curve of the wall of the container and of the brine adhering thereto. The equilibrium point can be calculated, that is the temperature which provokes the spraying, during the preset Sp seconds, of brine on the packaged beverage and its container.

Let Ti, T1, T2, T3 be the measured temperatures, Tp the temperature in the stoppage and Tf that desired and X the time between readings.

$$X = Kenvase \times Ln\ ((T1\text{-}Tp)\ /\ (T2\text{-}Tp))$$

$$X = Kenvase \times Ln\ ((T2\text{-}Tp)\ /\ (T3\text{-}Tp))$$

Hence, eliminating X and Kenvase:

$$(T1-Tp) / (T2-Tp) = (T2-Tp) / (T3-Tp)$$

$$Tp = (T22-T1 \times T3) / (2 \times T2-T1-T3)$$

The equilibrium temperature in the stoppage depends only on the three temperatures cited T1, T2 and T3 and for its calculation it does not depend on the temperature of the brine or on the initial temperature of the beverage or on the coefficients K and Kenvase or on the time between readings X.

If the times between the temperature readings are not the same, then:

$$X1/X2 = Ln ((T1-Tp) / (T2-Tp)) / Ln ((T2-Tp) / (T3-Tp))$$

Thus the value of Tp can be found by successive approximations. It is a less elegant method than the previous one.

Knowing the temperature Tp after cooling for Sp seconds and the initial temperature of the beverage Ti, the desired final temperature Tf and that of the brine Ts, K can be calculated for the beverage and therefore the time Sr that remains for cooling:

$$K = Sp / Ln((Ti-Ts) / (Tp-Ts))$$

$$Sf = K \times Ln((Ti-Ts) / (Tf-Ts) \text{ Total cooling time}$$

Since Sp seconds of cooling have already elapsed, there remains:

$$Sr = Sf - Sp$$

With this system, stopping the cooling, but maintaining the rotation, for some seconds the processor can take data to satisfy the wishes of the user for good precision. In principle a few seconds of stoppage will be sufficient for the calculation.

The interval between the temperature readings on the surface of the container, X, should be established correctly since it influences the error in calculating the equilibrium temperature, Tp, which will become greater as X becomes smaller, having more effect for a higher Kenvase. A value of X between 3 and 6 seconds is valid for normal containers. In practice a value should be chosen as a function of experience and made predefined and common for all containers.

Depending on the error in the temperature reading sensor, more or less substantial deviations are produced. To minimize this effect, measurement bursts should be taken and the calculated results averaged.

The microprocessor will take readings continuously from the IR sensor at intervals of XR milliseconds. In the tests 32 readings were used at a cadence of 20 milliseconds between readings which allows 2 turns of a can rotating at 200 r.p.m.

When the moment comes to calculate the first temperature of the surface of the container the average will be made of the last n readings of the sensor and this will be the value T1. Calculating the second temperature T2 of the surface will be carried out a preset time X after calculating T1 using the last n readings. Calculating the third temperature T3 of the surface will be done after the same preset time X from calculating T2 using the last n readings. Using the values T1, T2 and T3 the stoppage temperature Tp will be calculated as has been explained above.

The greater the number n of readings from the IR sensor, used to obtain T1, T2 and T3, the greater the precision in calculating Tp.

The error produced by taking as the temperature the average of n, acquired in the manner explained, is negligible in practical terms.

Since the temperature reading is not exact, greater precision is achieved by carrying out a second stoppage in the proximity of the calculated time and repeating the calculations.

Running water will be used for the rinsing process. If its temperature is higher than that desired for the beverage it will raise it. If the temperature of the water and the rinsing time Slav (preset) are known, the additional spraying of brine can be calculated to offset the heating by rinsing. This implies installing a heat sensor to know the temperature of the water or having it stored in the memory of the microprocessor.

The temperature that will be obtained with the rinsing will be:

$$TfLav = (Tf - Ta) / eSlav / K + Ta$$

The temperature increment in the beverage will be:

$$CalAgua = TfLav. Tf$$

If the rinsing water is warmer than the desired temperature, it has to be cooled for a longer time, and otherwise less:

$$Smas = K \times Ln ((Tf - Ta) / (TfLav - Ta))$$

The total duration of the brine spray for cooling will be:

$$Total\ seconds = Sp + Sr + Smas$$

The total duration of the process will be:

$$Total\ seconds = Sf + (Sgoteo + 2 \times X) \times Nparadas + Smas + Sdesagüe + Slav$$

Sdesagüe = Time necessary to remove the brine before rinsing

When it is wanted to cool more packs of the same beverage it will not be necessary to make stoppages since K has been calculated already. The process time will be:

$$Total\ seconds = Sf + Sdesagüe + Slav$$

If the value of K for a beverage is stored and access can be made to the same, it will not be necessary to make stoppages.

Since alcohol lowers the freezing temperature of the beverages which contain it, it is necessary to consider the alcoholic content when it is wanted to chill below 0° C without freezing occurring.

It is proposed to store the data K, Tf and alcoholic content of the last beverage cooled and those of those cooled once and which it is desired to record, which will be termed predefined.

If the system incorporates a complete alphanumeric keyboard, or similar to those used for cell telephones, it is also possible to store the name or description of the beverage.

To measure the temperature of the container infrared temperature sensors or thermography camera will be used:

Simple and economical solution:

Indicate to the user, by means of a graph, the appropriate position of the container so that the main body is monitored by an IR sensor. This correct positioning will produce a saving in sensors, only one IR sensor being needed, as well as simplifying the program.

Complicated solution and expensive:

Since it is foreseen that the system will accept containers of different sizes, it would be necessary to position IR sensors to cover any position for a beverage such as a bottle of beer.

The initial reading of the sensors will be different depending on whether they detect the temperature of the main body of the container, the neck of the container or that of the enclosure.

By means of a mechanical, optical or ultrasound sensor the position of the greatest diameter of the beverage container is determined and the pertinent IR sensor is chosen to accept the readings.

A thermal camera can be used as an IR multi-sensor

All that explained above is applicable if what is intended is to heat a packaged beverage with a spray of hot liquid (water or any other), since it is also a transfer of calories but from the exterior to the interior of the container, the coefficient K being the same.

A freezing process can be carried out in a controlled manner inside the container. If rotation is maintained the freezing begins on the wall of the container, the final part frozen being the area on the axis of the container. The time for the partial freezing will depend on variables such as the freezing temperature of the beverage, the heat from the state change and the coefficients and variables referred to above and the freezing percentage. Calculating the time is difficult because K increases as ice is formed on the walls of the container hindering transfer of the cold. In practical terms it will be convenient to fix a freezing time estimated by the user's experience of the order of some minutes. If the freezing is not complete it is easily possible to perforate the mouth of the container and allow the unfrozen beverage to emerge for consumption. This is a very good solution for having a beverage like lemonade very cold for some time without being spoiled.

To cool the liquid held in a container that cannot be rotated, a solution is to have an auxiliary recipient available with one or more outlets on the bottom to remove the brine at a rate less than the input delivered by the jets. It will have a top cover, formed by some rods or similar, through which the brine can pass, to maintain the container submerged which will be located in a container of stainless steel or plastic rods to keep it separated from the walls of the auxiliary recipient. The brine will fall into the auxiliary recipient which, not being emptied at the rate of ingress, will fill so that the container will be completely surrounded by very cold brine. In the top part of the auxiliary recipient there will be one or more drains which can have the entrance through the bottom, with more than sufficient capacity to prevent the brine from overflowing. Since the container can float in the brine, the upper part of the container is in turn held by the cited cover which will maintain it submerged. The brine will circulate around the whole container, being renewed continually during the time of the process. The rinsing of the container will be done in a similar way, applying water when the brine has been removed. The container, the auxiliary recipient and the container will be washed.

The container can be eliminated if the auxiliary recipient has the cover positioned below the upper level and some rods on the inner part which maintains the container separate from the walls and the bottom.

Another applicable, more efficient solution is to pass the beverage to a container which can rotate.

With the same auxiliary recipient and a container divided internally into horizontal or vertical compartments or in any other direction, foodstuffs packaged in thin-walled waterproof bags from which it is convenient to remove the air can be frozen. If introduced in waterproof bags open at the top, positioned so that when spraying the brine it does not penetrate inside, the pressure of the brine will expel the air.

Both in the cooling of recipients that cannot rotate and in the freezing of packaged foodstuffs, it is not possible to apply the automatic process for calculating K described above since the development of the surface temperature of the container in the stoppage is not significant.

An instruction is necessary for the microprocessor indicating that the axles should not rotate during the process. It can be manual or automatic using a sensor that determines the presence of the auxiliary recipient.

For a given non-rotatable beverage it can be calculated by cooling for a given time Sprueba and measuring the initial Ti and final Tf temperatures. As the temperature of the brine Ts is known, K will be deduced for that specific beverage:

$$K = Sprueba / Ln ((Ti - Ts) / (Tf - Ts))$$

This value will be filed for future use.

When K is known, the cooling time can be calculated in the same way as that cited for predefined beverages with which it is not necessary to make stoppages.

For practical purposes, the freezing is proportional to the square of the thickness of the piece to be frozen. The following will be applied for the calculation in minutes and the thickness in centimetres:

$$\text{Minutes} = \text{Espesor2} \times (\text{Krefr} / (\text{Ti} + 1) + \text{Kcong} / (-1 - \text{Ts}))$$

Krefr = 20
Kcong = 120

This system is acceptable for pieces of reduced thickness.

If freezing simultaneously pieces of different thickness, the thickest will be considered for the calculation.

The microprocessor which the equipment incorporates will control the temperature sensors, the operation of the solenoid valves and the electric pump for spraying the brine jets or the cooling solution and the return to the reservoir, depending on the assembly, and the motor which will produce the rotation of the containers, even being able to control the refrigerator compressor employed to cool the brine or coolant solution and the destination of the chilling fluid in the case of the same compressor being used to maintain the cold in the freezing area of a domestic freezer. The values of the temporal coefficient K, the alcoholic content Galc and the final temperature Tf of the predefined beverages including the last cooled, will be stored in memory.

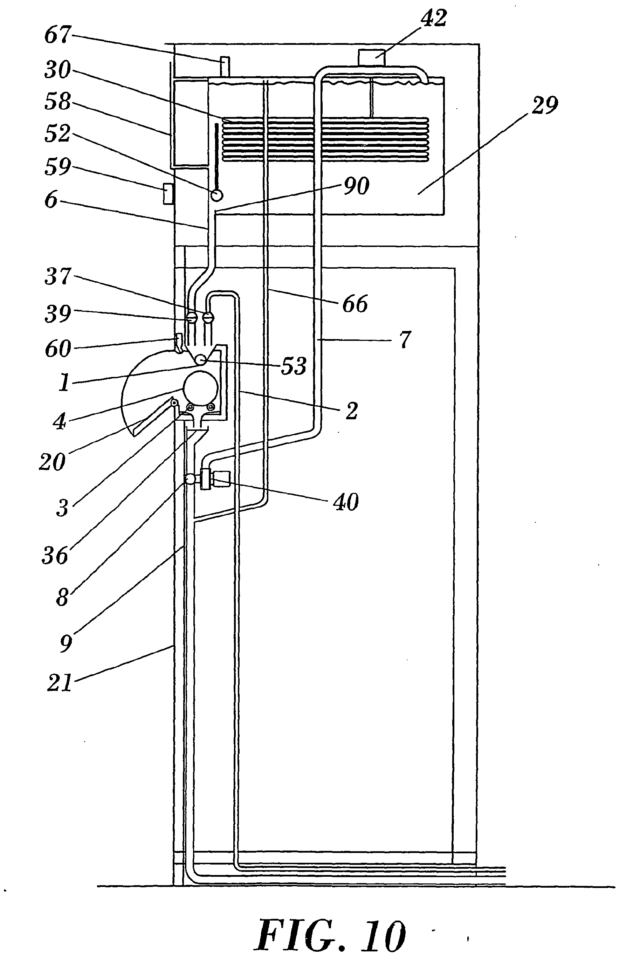

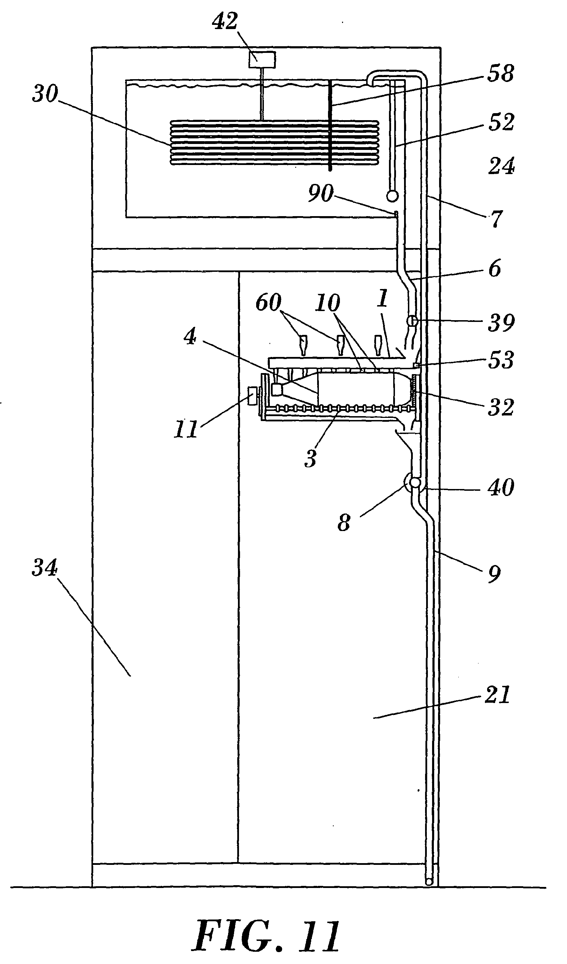

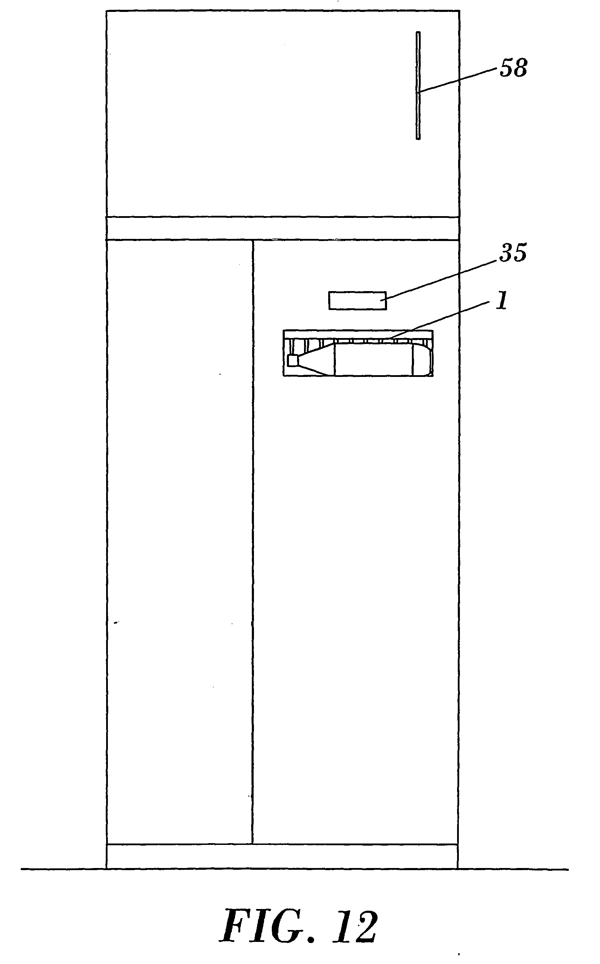

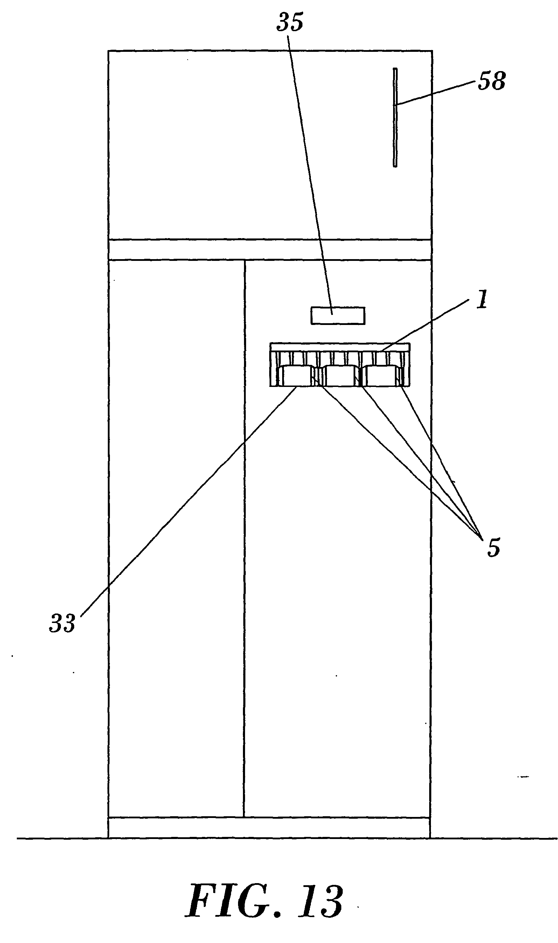

The placement and form of the brine reservoir can be any whatsoever, but for the adaptation to a traditional domestic freezer unit the most appropriate position is the upper part, Figures 10 to 13, since it is an area completely unused for the difficulty of access thereto, having the advantage of not occupying useful space in the room where it is located, the internal capacity being that of a refrigerator which incorporates a quick cooler similar to that of the appliances presently employed.

The quick cooler is appropriate for making domestic ice cream or even crushed ice beverages, being a apparatus of greater efficiency than those presently employed in which the cold is provided by a mixture of water, ice and Sodium chloride. In the apparatus disclosed a recipient is foreseen inside which there is an element which stirs the product to be frozen which is bathed on all its external surface with the cooling brine, be this as a spray or by immersion, the stirrer being power-driven through an auxiliary output of the motor which drives the rollers, said equipment having a reduction gear and a hermetically sealed input of the axle, whilst the container is held to prevent it from turning.

Maintaining the appropriate solution of $CaCl_2$ is easy since the mass fraction can be set to an upper value of 0.3. When cooling, part of the $CaCl_2$, will crystallize forming $CaCl_2$-$6H_2O$ which will fall to the bottom. If for whatever reason the water content increases, it dissolves again. The content of $CaCl_2$ in the solution can be monitored with a densimeter.

## DESCRIPTION OF THE DRAWINGS

To complete the description that is being made and with the object of assisting in a better understanding of the characteristics of the invention, in accordance with preferred practical embodiments of the same, this description is accompanied with a set of drawings, as an integral part thereof, wherein by way of illustration and not restrictively, the following has been represented:

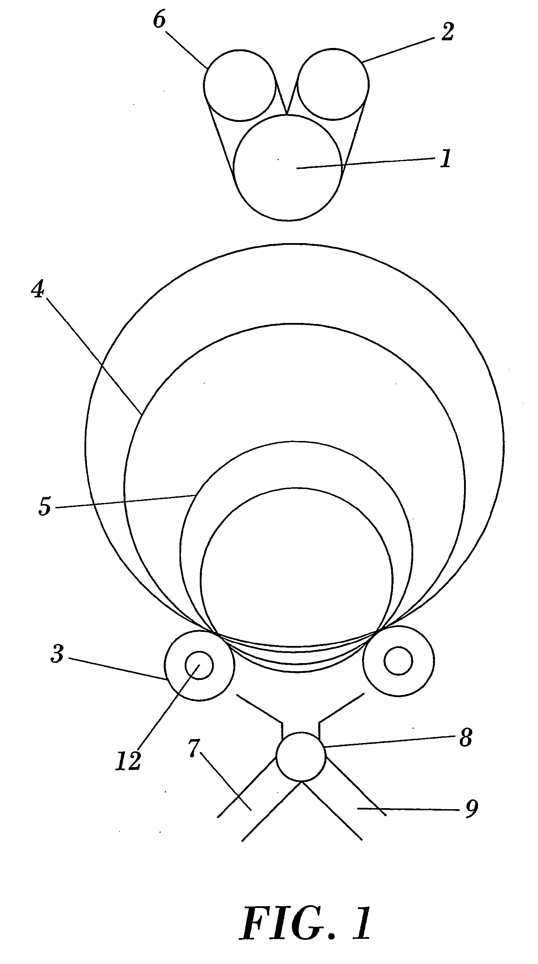

Figure 1. - It shows a schematic cross-section, normal to the axis, of the cans or containers of different diameters to be cooled, positioned on the rotating axles with annular projections or similar, these containers being under the spray piping on which the cooling liquid distribution pipes and that of rinsing water end.

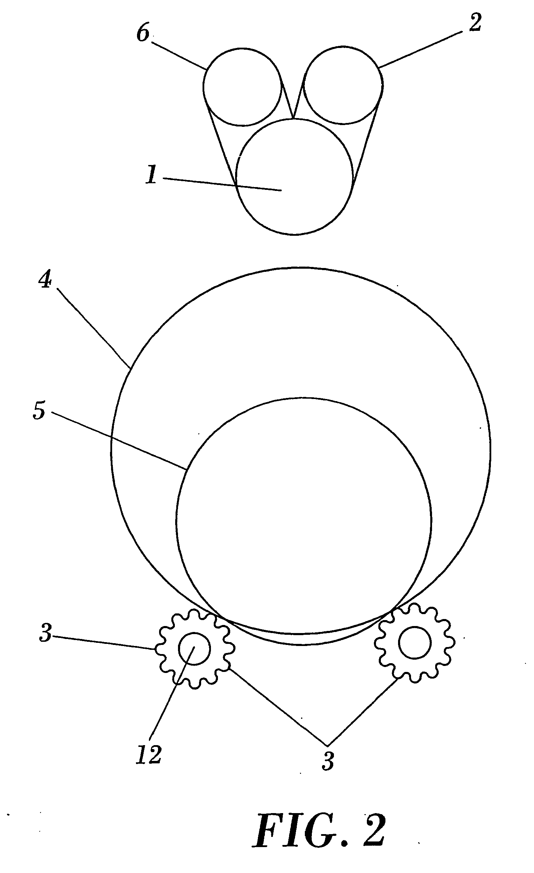

Figure 2. - Similar to the preceding figure with toothed annular projections.

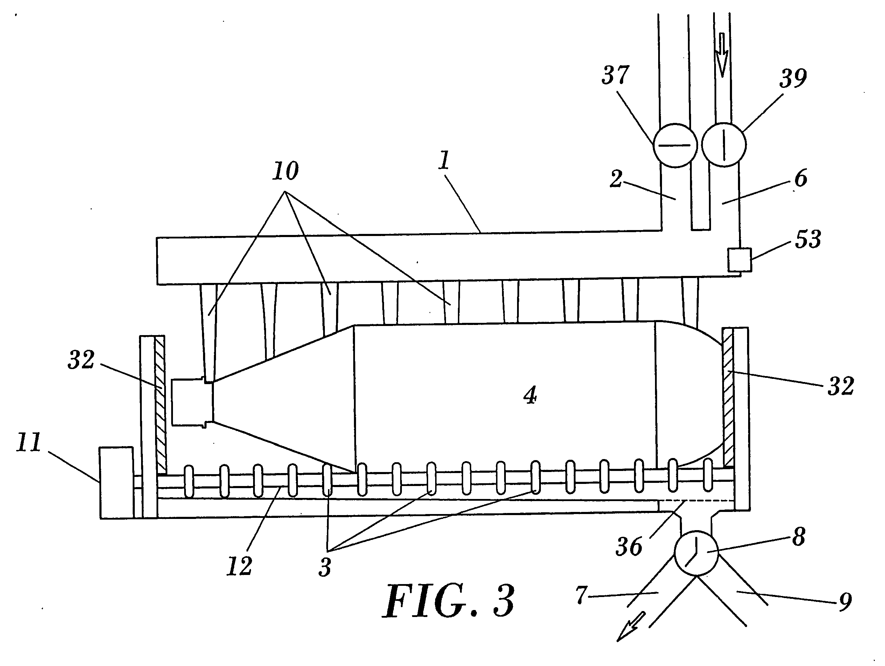

Figure 3. - It shows a side view in detail of the tray on which a bottle is located during the cooling by spraying with brine jets.

Figure 4 - It shows a side view coincident with the previous figure in which cans appear being cooled instead of a bottle.

Figure 5. - It shows a container of circular cross-section during its cooling by application of the brine, in which the distribution is observed of the liquid on its surface while it rotates through the action of annular projections, as well as the removal of the brine being appreciated through a return tube which leads it to the reservoir.

Figure 6. - It shows a representation coincident with the previous figure in which the container rotates in the opposite direction through the corresponding action of annular projections in the direction opposing that represented in the preceding figure.

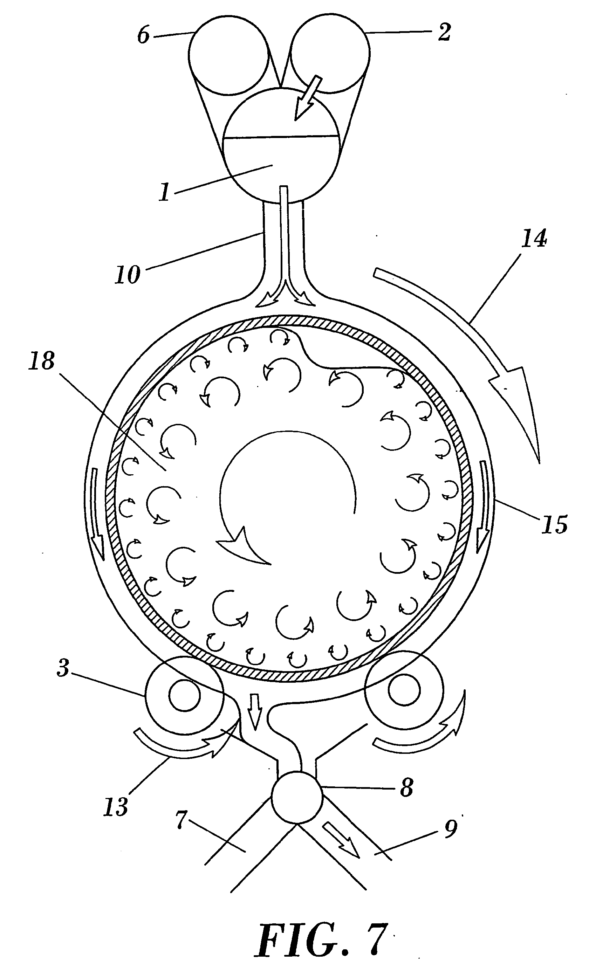

Figure 7. - It shows a representation coincident with the preceding figure in which the rinsing phase of the container is represented and subsequent removal of the water through a rinsing drainage pipe.

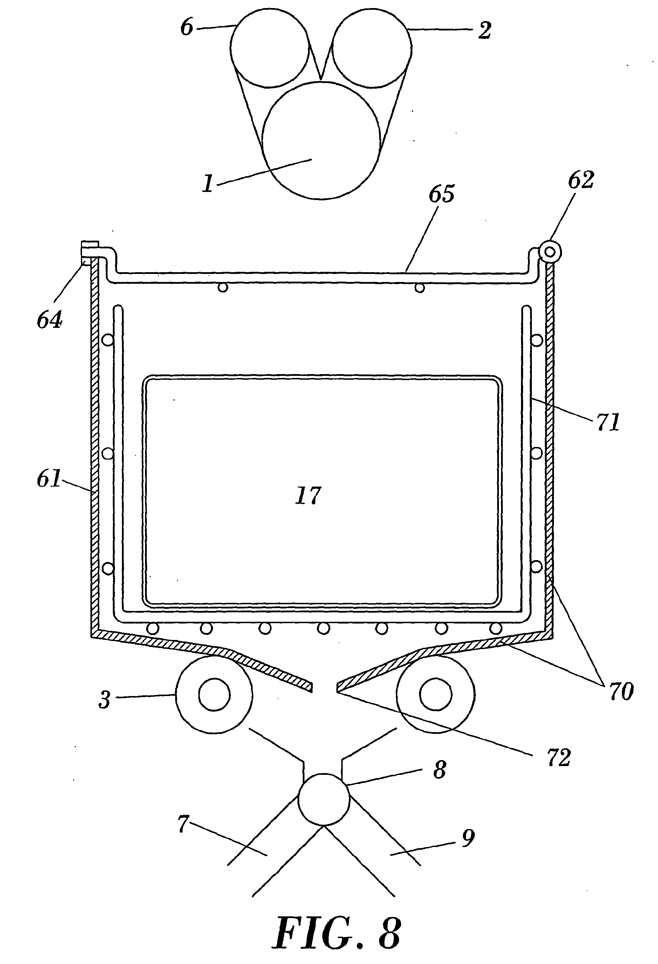

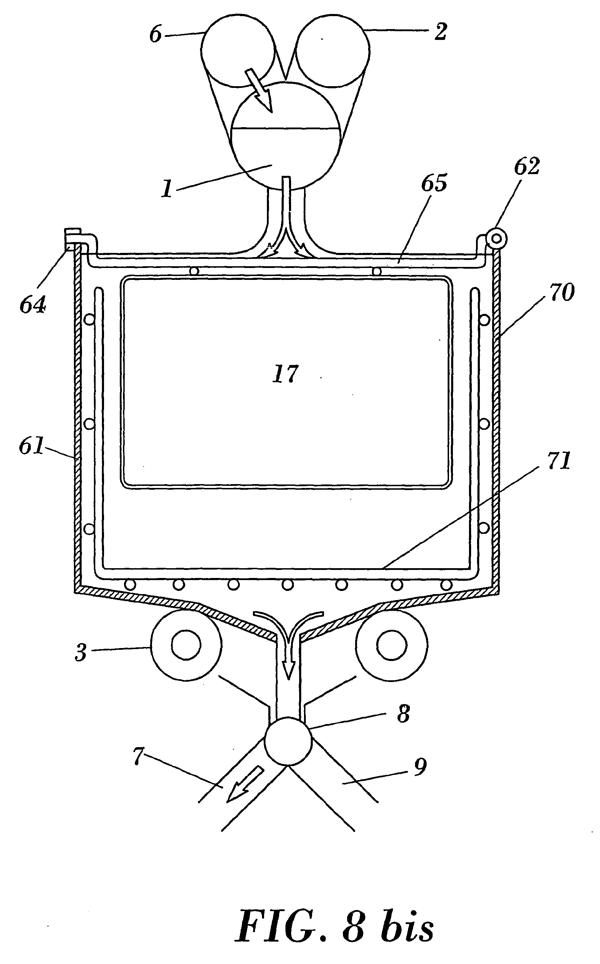

Figures 8 and 8 bis. - They show a container of rectangular cross-section before and during its cooling by application of the brine, for which an auxiliary recipient is used wherein the container to be cooled is introduced and whereupon the brine is sprayed.

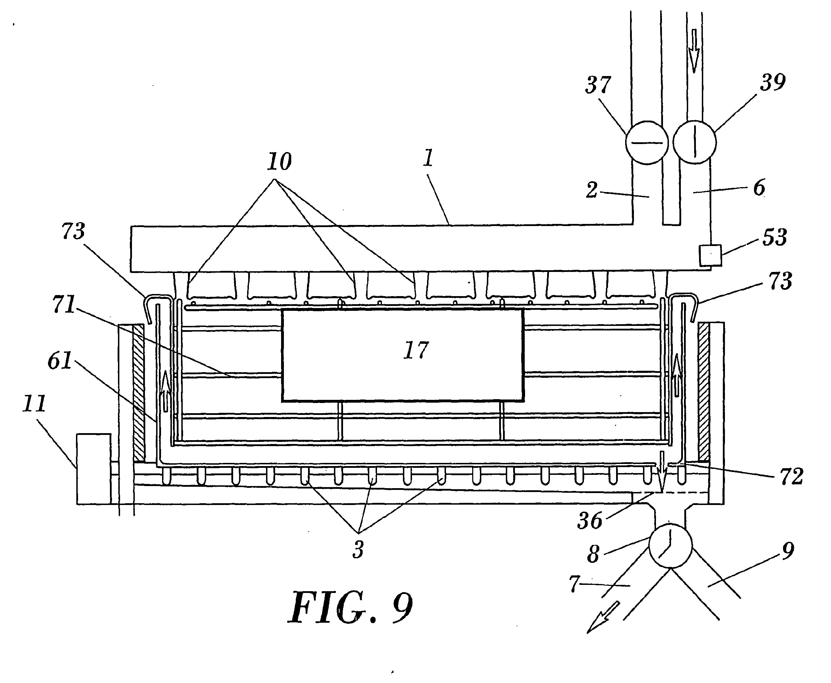

Figure 9. - It shows a normal representation to the preceding figure in which other constructional details of the auxiliary recipient are observed.

Figure 10. - It shows a side view in detail of the interior of a first embodiment of the apparatus for rapid cooling of packaged beverages in which its constituent elements are observed.

Figure 11. - It shows a front view in detail of the interior of the first embodiment of the cooling apparatus.

Figure 12. - It shows a front view of the first cooling apparatus embodiment in which are observed the control keyboard and the tray on which a bottle has been placed for its rapid cooling.

Figure 13. - It shows a front view coincident with the preceding figure in which some cans are observed introduced for their rapid cooling.

Figure 14. - It shows a side view in detail of the interior of a second embodiment of the rapid cooling apparatus of packaged beverages in which its constituent elements are observed.

Figure 15. - It shows a front view in detail of the interior of the second embodiment of the rapid cooling apparatus of packaged beverages in which its internal elements are observed.

Figure 16. - It shows a front view of the second embodiment of the rapid cooling apparatus of packaged beverages in which are observed the control keyboard and the tray on which a bottle has been introduced for its rapid cooling.

Figure 17. - It shows a front view of the second embodiment of the rapid cooling apparatus of packaged beverages in which it is observed that some cans have been introduced for their rapid cooling.

Figure 18. - It shows a side view in detail of the interior of a third embodiment of the cooling apparatus with top access to the containers.

Figure 19. - It shows a front view of the third embodiment of the cooling apparatus in which a cover is observed which covers the containers to prevent splashing.

Figure 20. - It shows the apparatus of the preceding figure with the top cover lifted.

Figure 21. - It shows a rear view of the apparatus object of the third embodiment with an open cover.

Figure 22. - It shows a block diagram in which the operating sequence of the cooling process is represented.

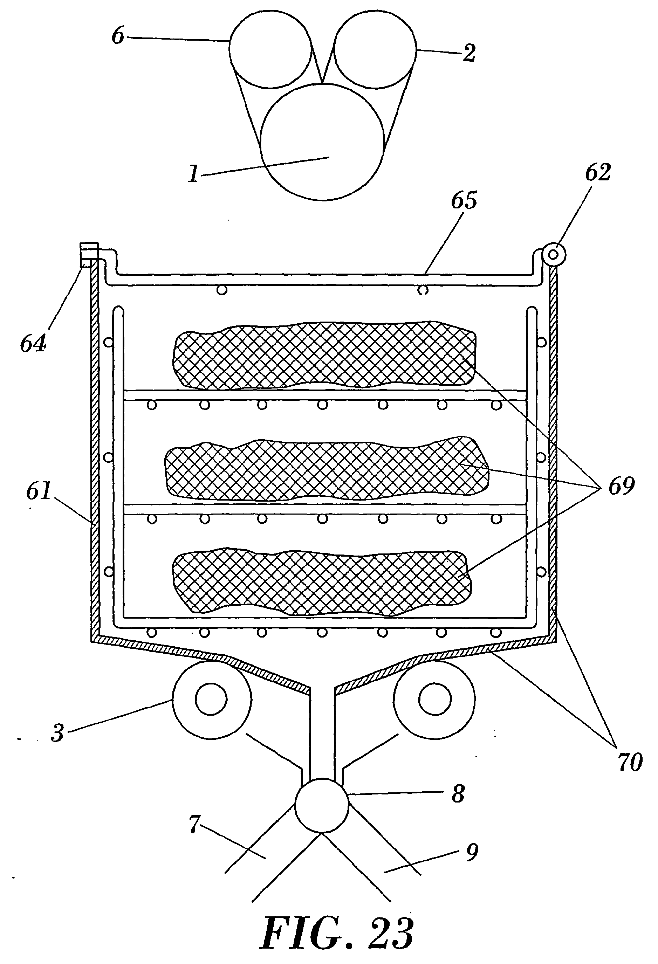

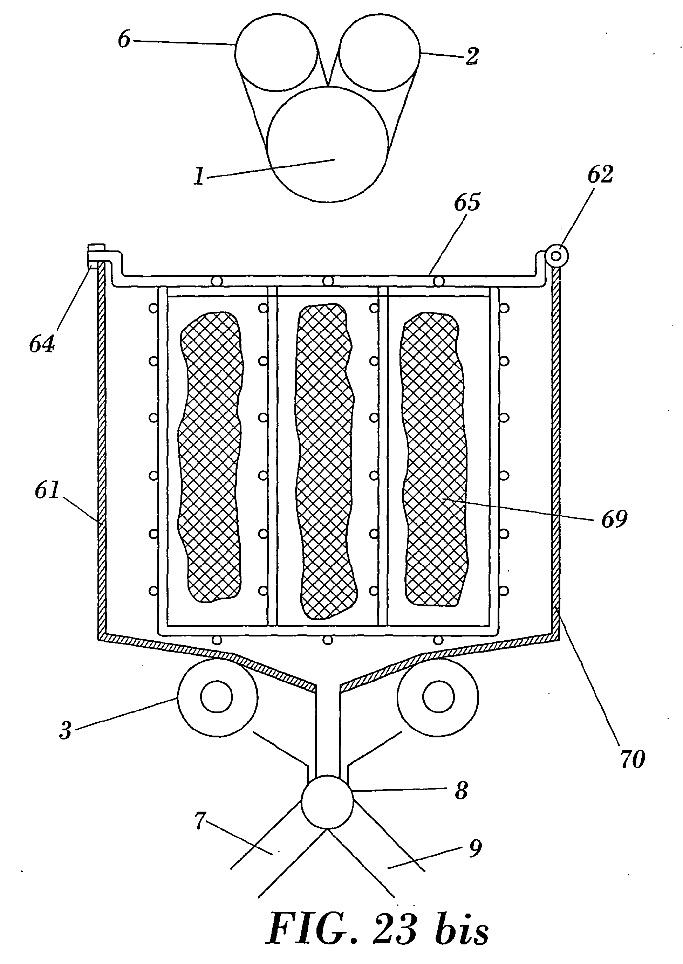

Figures 23 and 23 bis. - They show the cross-section of the auxiliary recipient with horizontal and vertical trays which support products to be frozen.

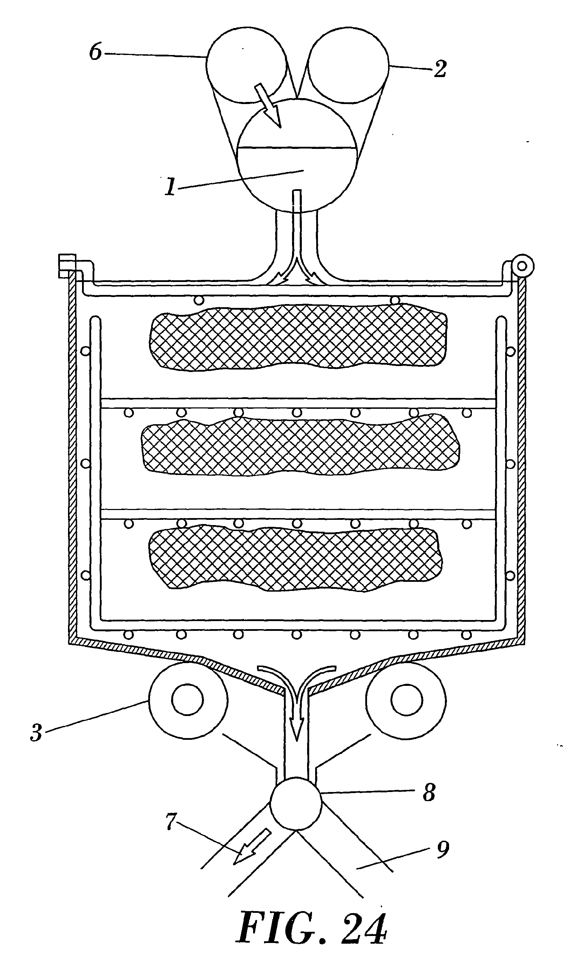

Figure 24. - It shows a cross-section similar to that of preceding Figure 23 during the freezing phase.

Figure 25. - It shows an ice-cream maker mounted in the apparatus.

Figure 26. - It shows different embodiments of projections: annular, worm and divided worm with changes of direction.

Figure 27. - It shows some comparative graphs of the cooling of containers when the procedure of the invention is used by spraying with brines at different temperatures, as well as the curves when mixtures of water and ice and solutions of glycol are used as defined in the state of the art.

Figure 28. - It shows different comparative cooling graphs of the times necessary for cooling different beverages contained in containers of different kinds without stoppages in which the temperature is represented on the ordinates and the time on abscissas.

Figure 29. - It shows the cooling curve of a beverage with one stoppage and the warming curve of the surface of the container in the stoppage in which the temperature is indicated on the ordinates and the time on abscissas.

Figure 30. - It shows the cooling curve of a beverage with two stoppages and the two warming curves of the surface of the container, the ordinate axis corresponding to temperature and the abscissas to time.

Figure 31. - It shows the warming curve of a beverage with one stoppage and the cooling curve of the surface of the container in the stoppage in which the temperature is indicated on the ordinate axis and the time on that of the abscissas.

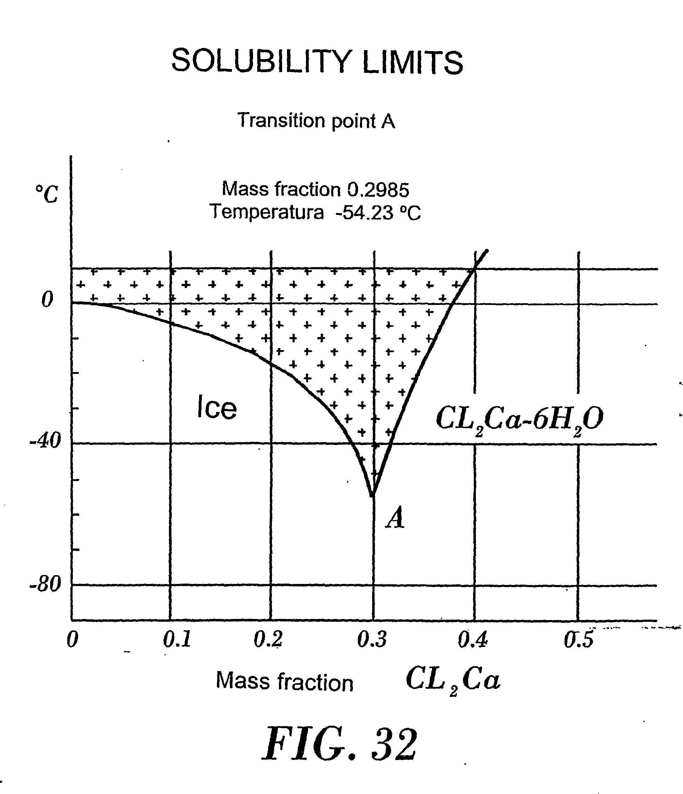

Figure 32. - It shows the behaviour of the CaCl2 solution.

## PREFERRED EMBODIMENT OF THE INVENTION

The rapid cooling of packaged beverages is applicable for can (5) type containers and bottle (4) type containers which are generally of greater diameter, or non-rotating containers (17), without discarding any other container type, and part of a chilling reservoir of coolant liquid (29), consisting of brine which is delivered through an outlet pipe (6) via a shut-off solenoid valve (39) and/or an electric pump (31) to a distribution pipe (1), where it is convenient to insert a sensor to measure the temperature (53) of the brine, from which the liquid is sprayed on the container (4-5-17) to be cooled laid on a cooling tray, the brine being recovered thereafter and passed through a filter (36) and a three-way valve (8) to a return pipe (7) which with or without the help of an electric pump (40) returns it to the reservoir (29).

The rapid cooling apparatus of packaged beverages is distinguished in that the tray is a support which comprises fundamentally two parallel axles (12) on which are integrally incorporated a number of support elements (3) which can be some annular projections which can be toothed or not or finally any other element of reduced width on which the can (5) type container or bottle (4) type container rests and rotates through the action of the axles (12) actuated by a motor (11) linked to one or both axles (12), it having been foreseen that the parallel axles (12) form a plane terminated in some butts (32).

It is envisaged that the spraying of cooling liquid be formed by one or more jets (10) which come out of orifices or outlets (82) made on the underside of the distribution pipe (1).

The timed spraying of the brine is carried out by means of some jets (10) which are sprayed toward the upper segment of the container and glides over the whole surface drawn by the force of gravity toward the segment of the container oriented downward from where the brine comes off covering most of the surface with a layer of cooling liquid (15) adhering by surface tension to the container.

The number of jets (10) and the flow rate of liquid sprayed on the can (5) type container or bottle (4) type container, as well as the level of turbulence in the beverage alter the heat transfer of the container. When the latter undergoes a rotary movement, during the acceleration time of the liquid, an induced current is produced in the proximity of the inner wall of the container (4-5). When the container (4-5) is braked or is subjected to rotation in the opposite direction a current is also induced in the opposite direction. Thus by subjecting the liquid to accelerations, stoppages and changes of direction a forced convection is achieved inside the container (4-5). Since most of the containers contain some air or gas, when the container rotates, the gas endeavours to stay in the upper part, hindering the rotation of the liquid and favouring the turbulence noticeably. In containers with gas inside it is not necessary to alter the direction of rotation.

Both in Figure 5 and in Figure 6 it is observed that the direction of rotation (13) of the rotating elements (3) induces an opposing direction of rotation (14) in the container (4-5), turbulence (18) being produced inside the container (4-5).

In the case of a container which cannot rotate for its form (17) the rotating elements (3) constitute support surfaces which remain fixed without rotating. An auxiliary recipient (61) will be used, equipped with a drain (72) in its lower part and one or more overflows (73) which allow the brine to escape when the auxiliary recipient is full. The container which cannot rotate will be immersed in the brine which will circulate around it, being separated from the walls by projections or rods (71). On starting to pour brine the container will also be separated from the bottom of the auxiliary recipient to allow circulation and drainage of the brine. The container will normally tend to float in the brine for which reason the auxiliary recipient shall have some rods or grills (65) which keep it submerged.

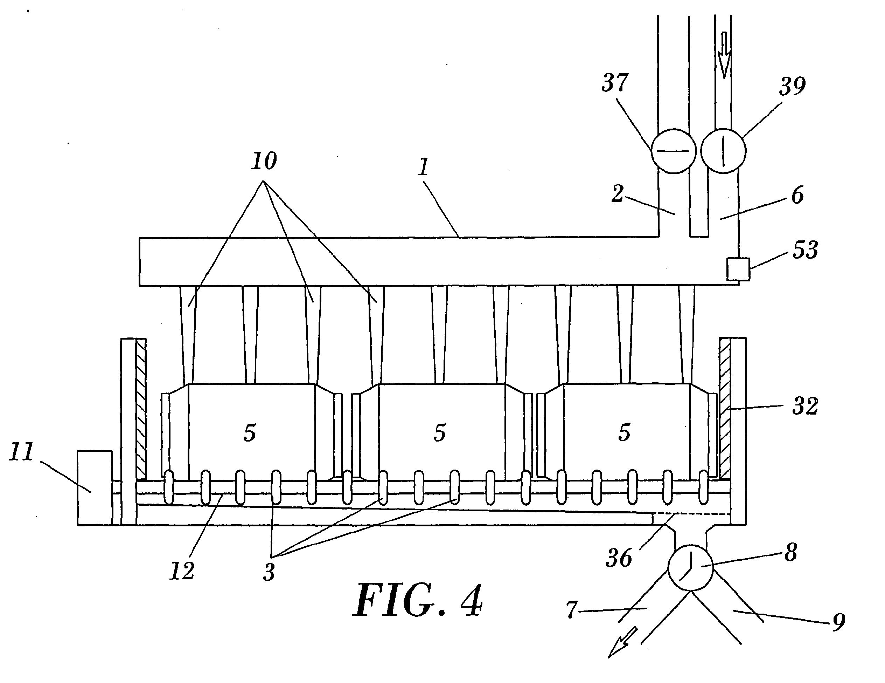

The return pipe (7) is located underneath the tray, which conducts the brine sprayed on the container (4-5-17) to the reservoir (29) with the inclusion of a drainage filter (36), such as can be appreciated in Figures 4 and 5.

Figures 10 to 13 represent a preferred assembly of the refrigerator equipment in which the brine reservoir is located in the upper part of a standard household refrigerator and freezer unit occupying an area with no specific application at present due to its height.

In these figures, among other elements, the reservoir (29) is observed which incorporates internally a refrigeration coiled tube (30), which can be directly linked to the chilling circuit of a household refrigerator-freezer (21) or to a dedicated chilling circuit (43), which can incorporate an agitator (42) internally which impedes stratification of the brine due to temperature and density.

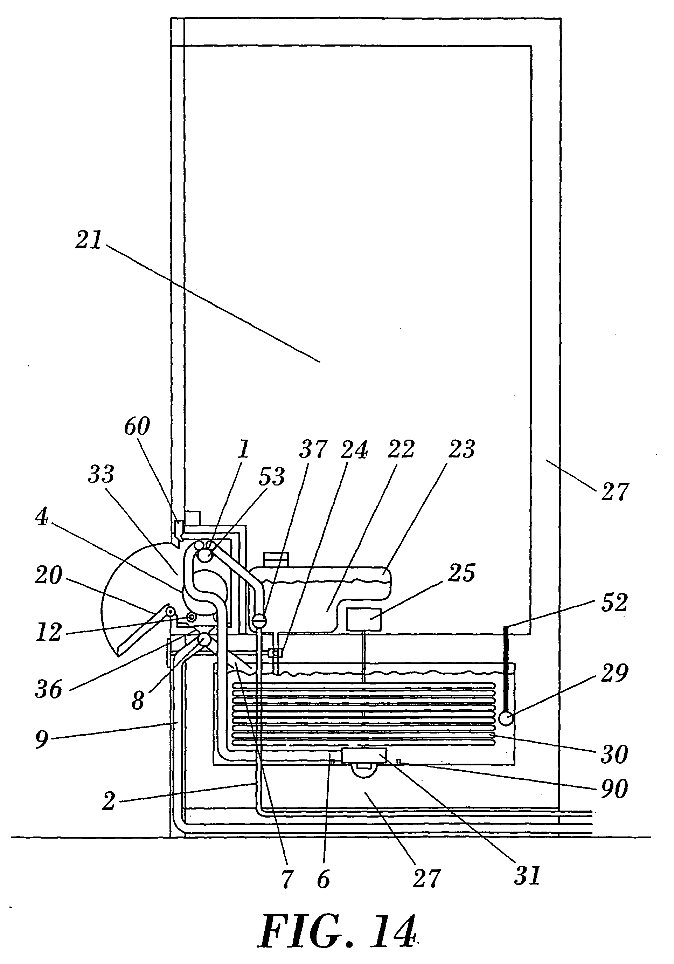

For the purpose of filling the reservoir (29) to offset losses, the additional incorporation is envisaged, as is observed in Figure 14, of an auxiliary tank (23) which contains brine (22) and is mounted above the reservoir (29) to which it is connected by means of an auxiliary pipe with the inclusion of a shut-off valve (24). Another form of filling the accumulator is to deliver the brine through the filter (36) and the return tube (7) and the return electrical pump (40), the level being controlled with an external viewing glass (58). Another form of filling is by delivering the brine through the return tube (7) and the filter (36), the level being controlled with an external viewing glass or seeing the overflow by opening a valve (44).

Returning to the explanation of Figure 10, the incorporation can be observed therein of an overflow tube (66) which maintains the maximum level of brine under control, in such a way that if when filling it surpasses the limit of said overflow the surplus brine falls directly into the drain (9).

After achieving the rapid cooling of the container (4-5-17), the same is washed by spraying with a spray of water which removes the brine remains adhering to the same.

To this end the apparatus incorporates a pipe of rinsing water (2), with a sensor to measure the temperature of the water, in which pipe there is a solenoid valve (37) which is actuated when the operation of cooling the container is completed, to open passage for the water which washes the container and removes the remains of brine from its surface, the water being removed thereafter through a rinsing drainage pipe (9).

The rinsing water pipe (2) ends, like the brine pipe (6), in the distribution pipe (1) from which the jets of water are sprayed onto the container (4-5-17). In a less simple installation one distribution pipe can be installed for the brine and another for the water.

The rinsing drainage pipe (9) is prolonged after the drainage filter (36) and a three-way valve (8) which selects the passage of liquid, either into this rinsing drainage pipe (9) or into the return pipe (7).

Different constructions of the apparatus are envisaged which based on a number of common elements, incorporate a number of additional elements characteristic of the embodiments which are described hereunder.

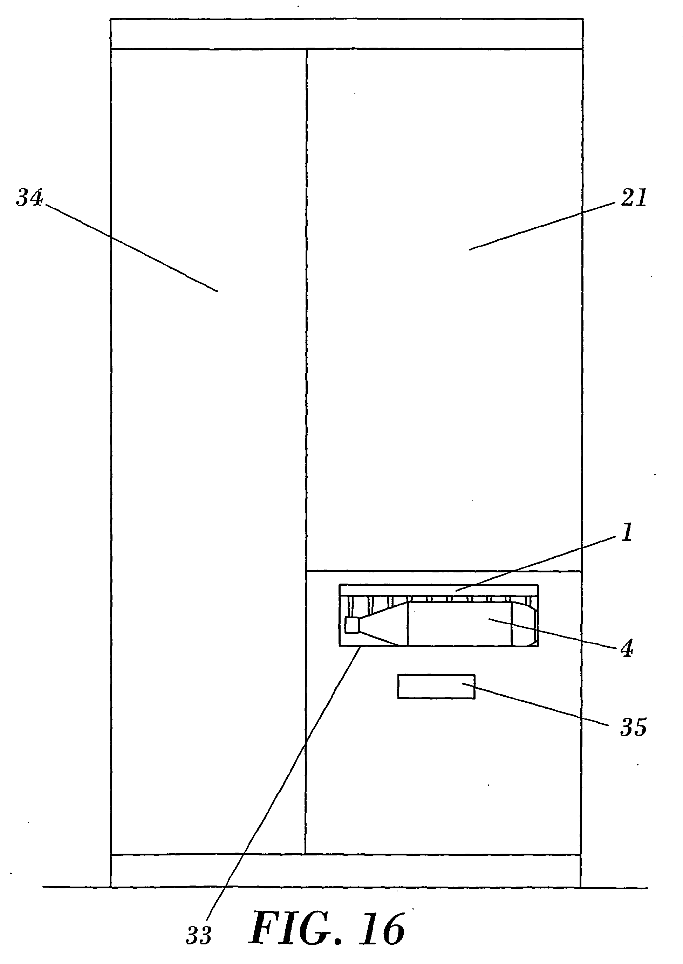

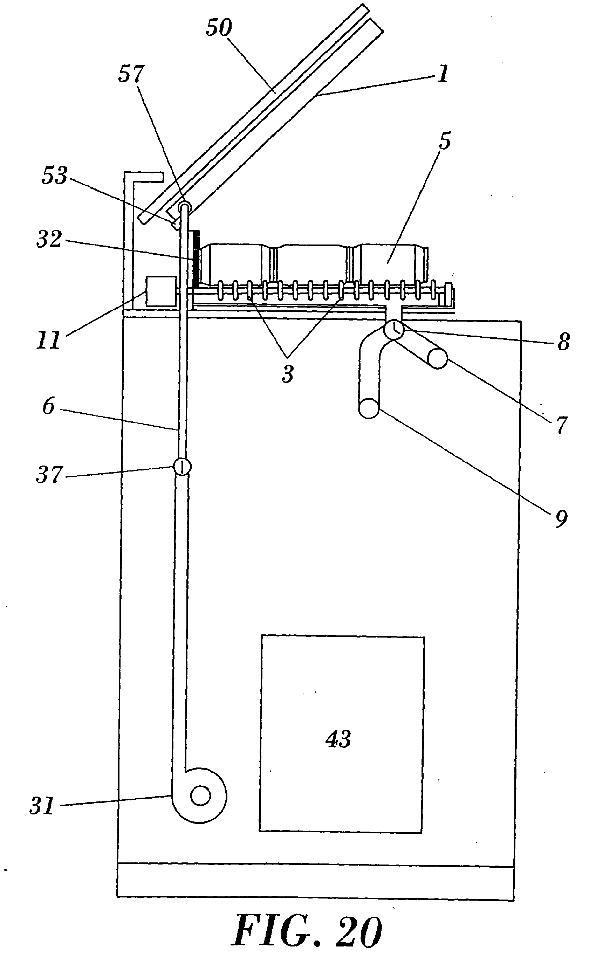

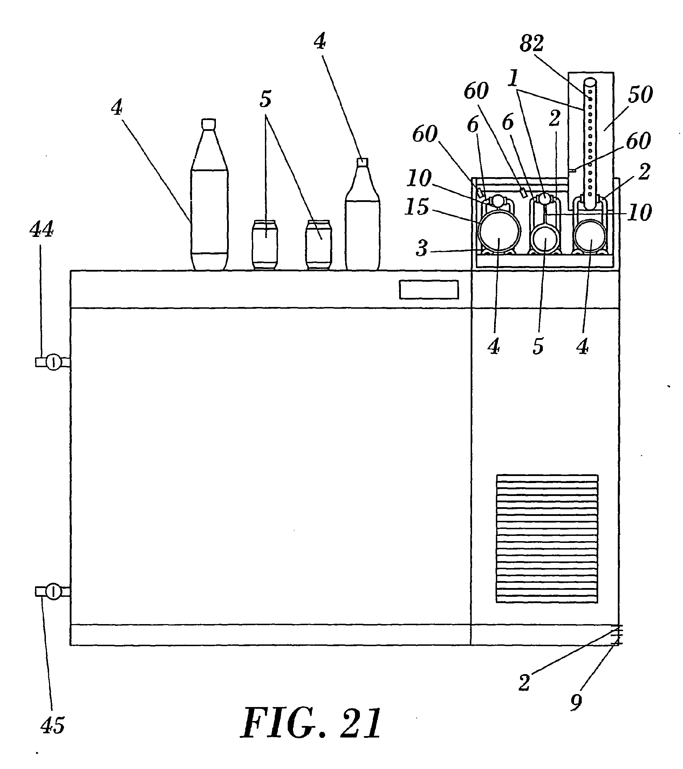

Thus for example it is possible to distinguish a second and a third embodiment of the cooling apparatus corresponding to Figures 14-17 and 18-21 respectively in which the cooling liquid reservoir (29) is located in a position underneath the tray, in which case the apparatus incorporates a pump (31) actuated by a motor (25) for driving the brine through the brine pipe (6) toward the distribution pipe (1) for its subsequent spraying on the containers (4-5-17).

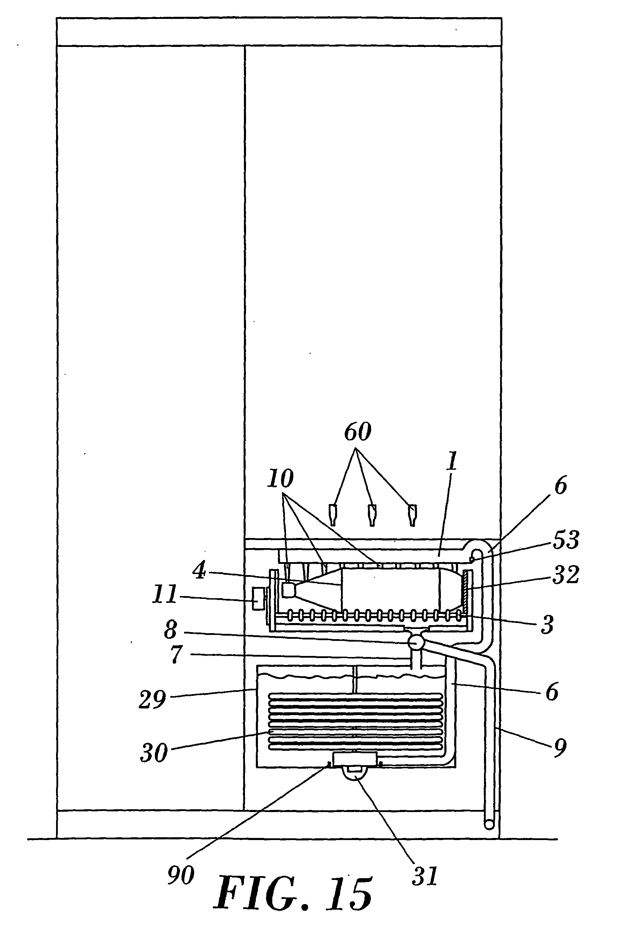

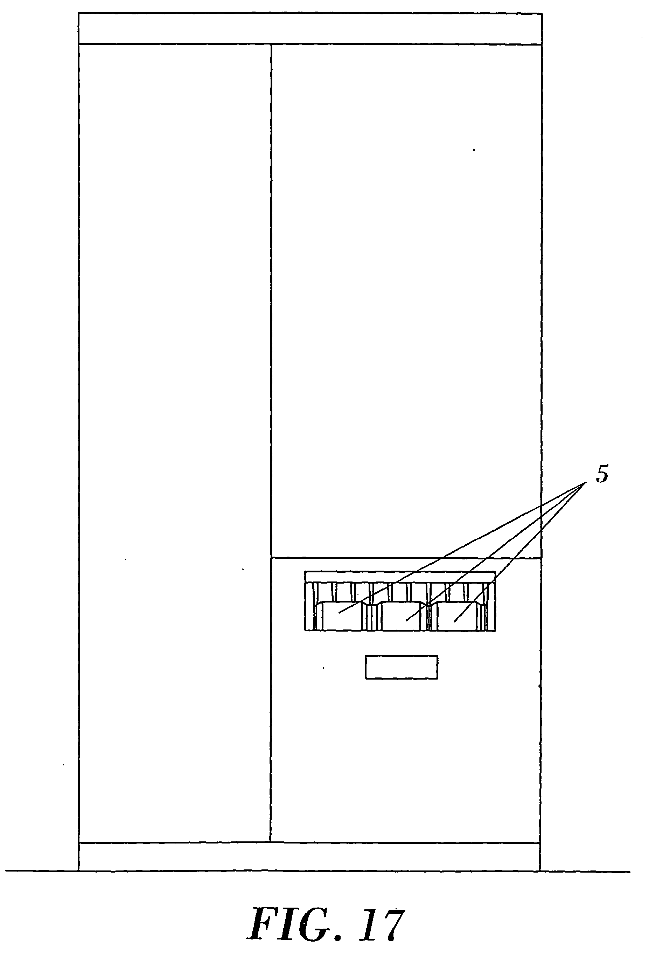

Based on this construction common to both embodiments, it is possible to distinguish in the apparatus of the first embodiment, see Figures 15 and 17, a refrigerator module (21) which can be adjacent to a freezer module (34), as well as showing a front opening (33) which gives access to a single tray covered or not by means of a folding lid (20), on which the container to be cooled is located.

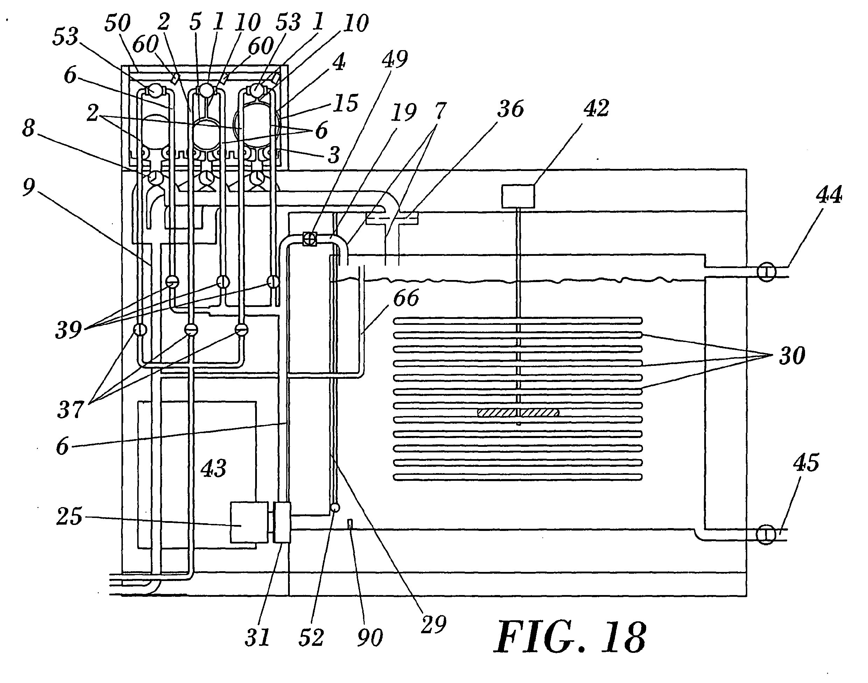

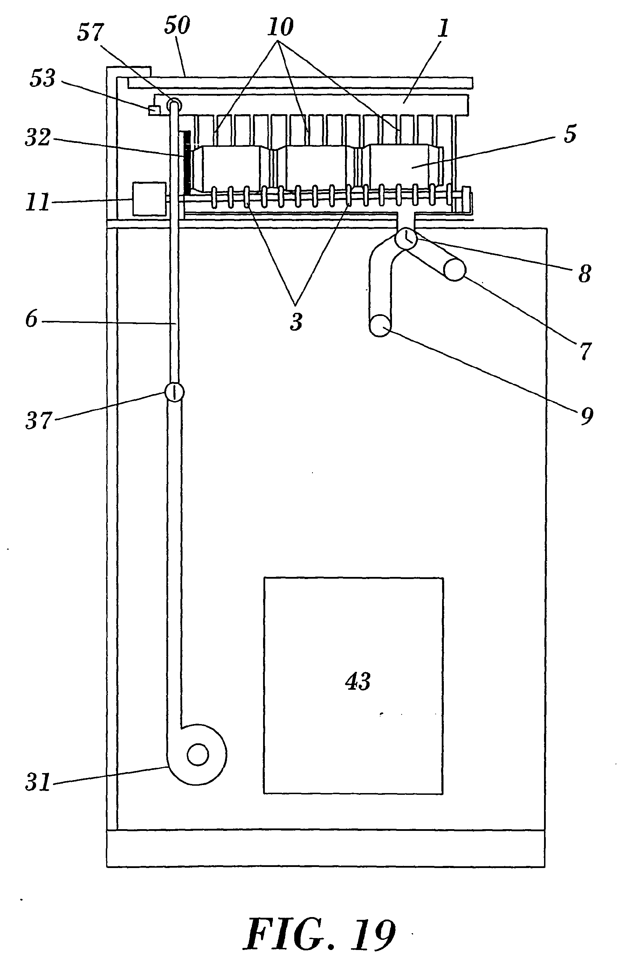

In the second embodiment, such as is observed in Figures 18 and 19, the cooling is conceived with one or more trays parallel to those which are accessed from above, a distribution pipe (1) being incorporated in each of the trays, with a sensor to measure the temperature of the brine, on which ends its corresponding brine pipe (6) and rinsing water pipe (2), with a sensor to measure the temperature of the water which can be in the common inlet, as well as consisting of corresponding rinsing drainage pipes (9) and return pipes (7) in correspondence with each tray, it having been foreseen that the pipes described are grouped in corresponding main ducts from which they run.

From the main duct from which the brine pipes (6) emerge, runs an auxiliary duct (19) connected to a pressure control valve (49) which discharges the brine delivered by the pump (31) into the reservoir (29) if a certain value of pressure is exceeded in said duct.

Inside the reservoir (29) the overflow tube (66) is observed which limits the maximum level of the brine content, the brine excess being emptied into the drainage.

The apparatus corresponding to this second embodiment incorporates an integrated chilling unit (43).

It is also observed in Figures 18-21 that the apparatus incorporates additionally a folding protection (50) hinged on an axle (57) which covers the trays and the containers thermally isolating that area and therefore making the cooling more efficient at the same time that it protects the containers and the brine sprays from accidental manipulation. Furthermore the reservoir (29) incorporates a level and filling control tube (44) for brine and a drainage tube (45) with stopcock.

The first embodiment of the invention such as has been represented above, is reflected in Figures 10-13 in which the reservoir (29) is seen located above the tray. In this case it is envisaged that the brine is fed by gravity from the reservoir (29) into the distribution tube (1) through the brine pipe (6) and that between the three-way valve (8) and the return pipe (7) a return pump (40) is incorporated which drives the removed fluid toward the reservoir (29). For the purpose of employing space usefully, this reservoir is located above the cooling equipment in the upper part of the refrigerator in an area which is practically never in regular use because of its height.

As in the second embodiment, the apparatus forms part of a refrigerator module (21) which has a front opening (33) giving access to a single tray, covered or not by means of a folding lid (20), on which the containers to be cooled rest.

In the three embodiments the incorporation of a keyboard (35) is envisaged for carrying out the selection of products and activating the operative sequence of the apparatus which has the following control elements: brine level meter (58) located in the reservoir (29), brine temperature sensor (52) located in the reservoir (29) and an indicator of the brine temperature (59) on the outside, temperature sensor (53) in the outlet pipe, temperature sensor of rinsing water and a temperature detector of the container (60) facing the tray or outside which can consist of infrared temperature sensors or a thermography camera.

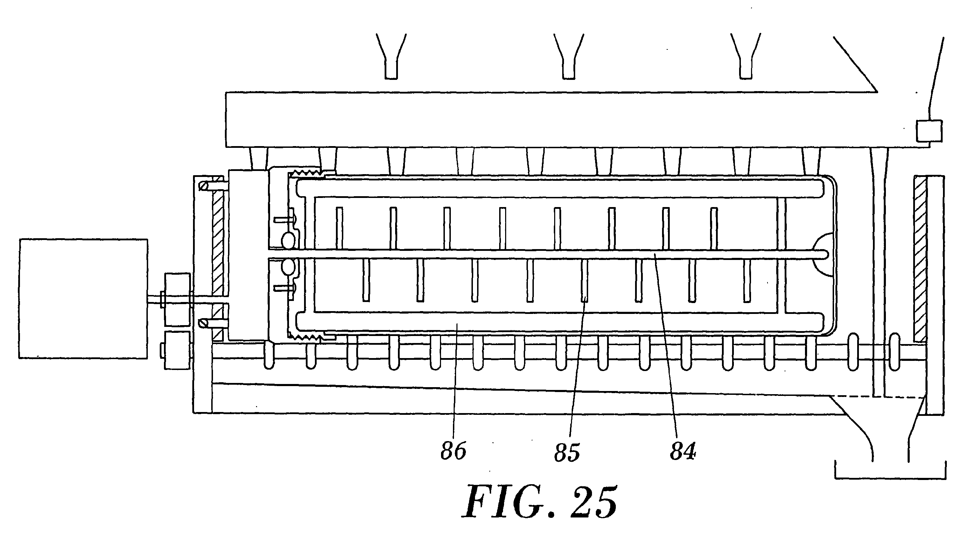

In Figure 25 an accessory is shown which, when inserted in the apparatus of the invention can be used for the production of ice creams or crushed ice beverages. This accessory apparatus is conformed by a hollow, closed recipient (83) in the interior of which a rotating axle (84) is mounted from which emerge successive blades (85) and scrapers (86) of the inner surface of the recipient which facilitates the preparation of the ice cream or iced beverage. Clearly the application time of the brine will be greater than when it is only intended to chill the beverages, since it is necessary to obtain the at least partial freezing of the product necessary for the preparation of the ice cream or iced beverage.

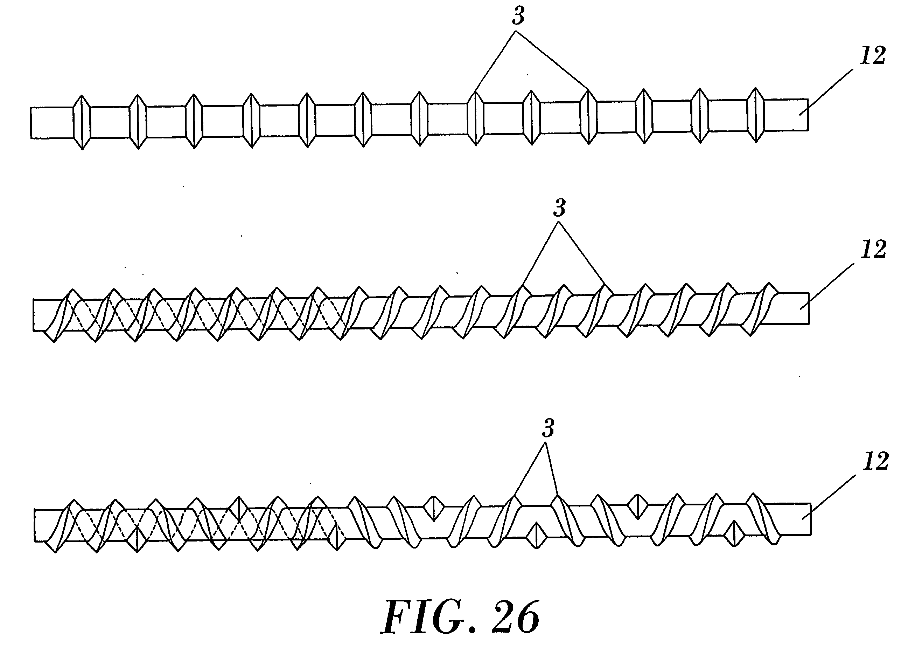

Figure 26 shows three types of preferred embodiments of the axles (12) which are integral with the projections (3) on the external edges of which the containers rest. In the first embodiment of said figure these projections are annular, whilst in the second these projections are implemented in helical form along the axles (12). In the third embodiment these projections are shown to be formed by helical segments in opposing directions. All these applications would be capable of fulfilling the initially foreseen functionality of allowing the brine to pass between the wall of the container and of the axle without producing undesirable vibrations.

The reservoir receptacles include on the bottom, a small barrier (90) to prevent the crystallized $CaCl_2$ from escaping.

Figure 28 shows the curves described in a temperature-time diagram for various beverages in different containers without stoppages for a brine of -40° C, with a tangential velocity of the container surface of 65 cm/second and without considering rinsing. This figure shows graphically the need to calculate the cooling time to obtain the desired temperature.

- The microprocessor will have the following preset values stored as well as the necessary programs in the standby situation and the cooling program:
- Kbase used for calculating the duration of the first spraying phase
- XR the time between temperature readings acquired with the IR sensor
- n the number of temperature readings used for calculating each temperature of the container surface in the stoppages
- X the time between the calculations of the temperatures of the container surface in the stops
- Sgoteo time set for non-presence of drops
- Sretorno time set to empty the enclosure of brine and clear the discharge pipe including the three-way valve
- Slav duration of the rinsing spray
- Tfbase preset value of final temperature
- Galc preset alcoholic content equal to 0
- Preset cooling value 5° C.

The actuations and monitoring in the initial standby situation are:

- Brine agitator acting according to programming. It does not need to be working continuously. It should work after a cooling session, when the brine tank is receiving cold and in predetermined periods to maintain the brine homogeneous.
- Measuring the temperature of the brine in the outlet of the tank Ts using a sensor and controlling the start-up/shutdown of the refrigerator compressor or transmitting the cold requirement signal from the brine tank.
- Measuring the temperature of the rinsing water Ta.
- Checking the level of the brine. It is possible to fit an external level viewer or use a sensor that gives an optical indication in the event of low level. If the level is lower than the recommended minimum, proceed to fill the tank in the following way: If the tank is in the lower position: three-way valve in brine position. Pump stopped. If in the upper position: three-way valve in brine position. Pump running. Brine valve closed
- Three-way valve in drainage position.
- Rinsing valve closed.
- Brine pump stopped. With top tank: brine valve closed.
- Check if there is data input

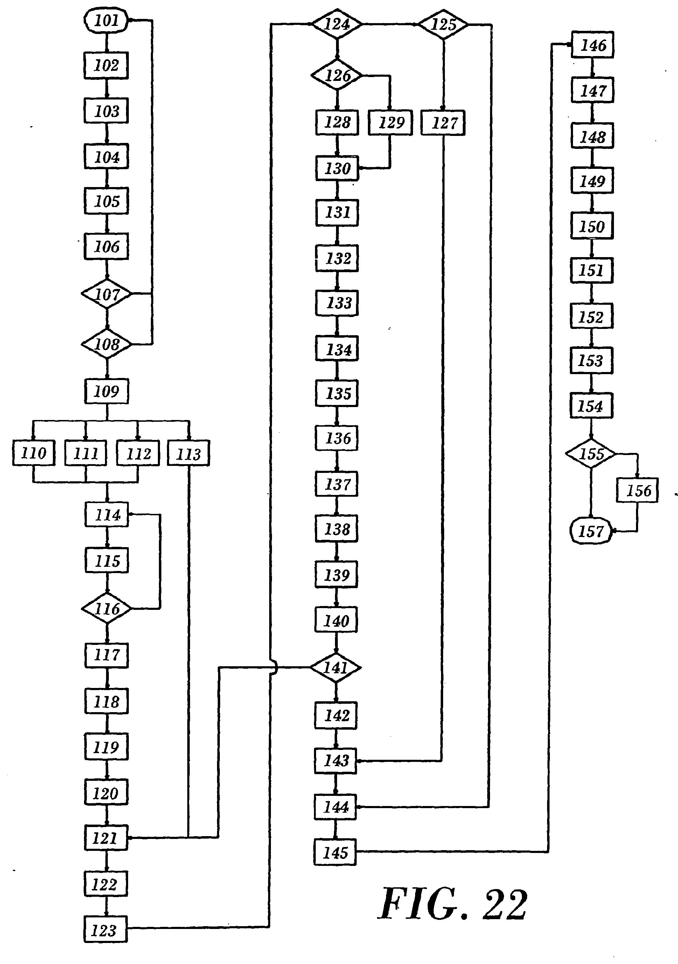

Figure 22 shows the flow diagram of the operating process:

(101) Standby situation. Values stored: initial preset final temperature, preset alcoholic content equal to 0, drip time, rinsing time, drainage time of the brine, time X between readings when stopped, time XR between temperature readings with the IR sensor, number of readings n in a burst, Kbase for calculating the first spray phase.

(102) Open door of the cooling enclosure

(103) Opening detector: door open: impedes rotation, cuts off the brine or water spray and stops the pump.

(104) Place the beverage on the axles with projections. In the event of there being only one IR sensor, locate it so that this sensor detects the temperature of the main body of the container.

(105) Close the door of the enclosure.

(106) Opening detector: door closed: allows rotation and the brine or water spray and the operation of the pump.

(107) Presence detector: detection of the presence of the beverage container with volumetric sensor or similar. If presence is not detected, return to (101)

(108) Situation of waiting for instructions. After a given time has elapsed without receiving instructions, return to initial standby situation (101)

(109) Indicate by means of functional keys or another procedure if the beverage inserted is not predefined or is the same as the previous one, or it is predefined or to be frozen. For example:

Same as previous ENTER key
Not predefined 0 + ENTER key
Standard can 1 + ENTER key
Another predefined 15 + ENTER key
Freeze 00 + ENTER key

(110) Predefined. If not present: return to (109). If present: the values of K, alcoholic content and final temperature are loaded.

(111) Previous. The values of K, alcoholic content and final temperature are loaded.

(112) New. Alcoholic content equal to 0 and final temperature equal to previous if this is greater than or equal to 0° C, otherwise it will be equal to 5° C

(113) Freeze: enter the minutes of operation. Go to (121)

(114) Enter desired final temperature or validate that recorded for previous or predefined or new.

(115) If the final temperature is less than 0° C and the beverage is new, you will be requested to enter the alcoholic content.

(116) Verification that the alcoholic content is compatible with the desired temperature without producing freezing using an algorithm. $[Tf >= Tcong = Galc / (Galc - 100) \times 31,895]$. If not so, return to the situation of entering temperature (114). Visual indication of temperature too low.

(117) Brine agitation system stopped.

(118) Put the 3-way valve for the drainage in brine return position.

(119) Begin rotating the beverage container.

(120) Reading of the initial temperature of the beverage using an !R sensor, using n readings and taking the average.

(121) Start-up of the pump. If the tank is in a position above the beverage: opening of the brine valve.

(122) Detection of the brine falling on the surface of the recipient (with IR sensor). Setting the spray time clock to 0.

(123) If the IR sensor permits, measure the temperature of the brine on the surface of the recipient for a few seconds. If not, measure it in the discharge pipe (1) with the sensor (53). If not, at the outlet of the brine tank (52). Precision is important in this measurement.

(124) If the beverage is new, go to (126). If not, go to (125).

(125) If the beverage is predefined or previous, jump to (127). If not, go to (144).

(126) Verification of the stoppage number. If it is the first, (128). If not, to (129)

(127) Calculation of the cooling time by means of an algorithm $[Sf = K \times Ln ((Ti - Ts) / (Tf - Ts))]$ which contemplates the initial temperature of the beverage, the temperature of the brine, the desired final temperature and K. Jump to (140)

(128) Calculation of the cooling time until the first stoppage by means of an algorithm $[Sp = Kbase \times Ln ((Ti-Ts) / (Tf-Ts))]$ which contemplates the initial temperature of the beverage, the temperature of the brine, the desired final temperature and Kbase. Jump to (130)

(129) Calculation of the cooling time from the first stoppage until the second by means of an algorithm $[S2p = 0.9 \times (Sf-Sp)]$ which contemplates the calculated duration of the cooling and that of the first spraying phase.

(130) After the calculated time Sp until the stoppage of the spray has elapsed, interrupt it. Stop the pump and close the solenoid valve of the brine if the tank is in a position above the beverage.

(131) Wait the time preset for the end of dripping.

(132) Continuous burst of temperature readings with the IR sensor of the container surface, which are filed in memory. The times between readings will be equal to that preset, XR.

(133) Calculation of the mean temperature of the last n of the burst [T1 = (t1 + t2+.... + tn) / n]

(134) Wait the preset time X.

(135) Calculation of the mean temperature of the last n of the burst [T2 = (t1 + t2+.... + tn) / n]

(136) Wait the preset time X.

(137) Calculation of the mean temperature of the last n of the burst [T2 = (t1 + t2+.... + tn) / n].

(138) Calculation of the equilibrium temperature by means of an algorithm [Tp = (T22-T1 x T3) / (2 x T2-T1-T3)].

(139) By means of an algorithm [K = Sp / Ln ((Ti-Ts) / (Tp-Ts)], the coefficient K is determined for the packaged beverage in process. With the second stoppage, the calculation is more exact.

(140) The duration Sr of the following spray phase is calculated by means of an algorithm [Sf = K x Ln ((Ti-Ts) / (Tf-Ts)]

(141) If only one stoppage has been made, jump to (121).

(142) Calculation of the spray time remaining without rinsing [Sr = Sf. Sp - S2p]

(143) Knowing the rinsing time Slav, the temperature of the water Ta and K, the heating is calculated that it will produce in the beverage and the additional time that is necessary to chill to offset it by using the appropriate algorithms [TfLav = (Tf-Ta) / eSlav/K + Ta; CalAgua = TfLav-Tf; Smas = K x Ln((Tf-Ta) / (TfLav-Ta)); Sr = Sr + Smas].

(144) Maintaining of the spray during the calculated time.

(145) Interruption of the spray. Stopping the pump if the tank is below. Close the brine valve if the tank is above.

(146) Wait for a preset time to conclude the return of the brine to the tank. If the tank is above, stop the pump.

(147) Three-way valve to drain position.

(148) Opening the rinsing water valve

(149) Waiting the preset rinsing time.

(150) Closing the water valve

(151) Stop the rotation

(152) Visible and/or audible external warning of end of process.

(153) K, the final temperature and the alcoholic content will be stored in the memory position of the previous beverage.

(154) Display end of process

(155) If it is not desired to store the beverage as predefined, go to (157).

(156) Enter a code number and store the values K, final temperature Tf and alcoholic content Galc. Using the alphanumeric keyboard it is possible to introduce the name or description of the predefined beverage which will allow systems to be established for search by name, making modifications in the order, etc.

(157) End of process.

## Claims

1. Procedure of rapid cooling of packaged beverages which comprises the spraying of a coolant liquid, preferably brine, which will cover the greater part of the surface of the container in rotation during a time calculated from the initial and desired temperatures, the temperatures of the cold solution and of the rinsing water, the duration of the rinsing and the temporal coefficient of the packaged beverage.

2. Procedure of rapid cooling of packaged beverages according to claim 1 **characterized in that** if the temporal coefficient of the packaged beverage is unknown when beginning the process, it will be calculated carrying out the spraying during a preset time, stopping the spraying, but not the rotation of the container, and taking at least three readings of the temperature of the surface of the container at different times, the equilibrium temperature of the container and the beverage being calculated, and from this last figure, from the initial one, from that of the cooling liquid and from the duration of the spraying applied the temporal coefficient is deduced, calculating thereafter the remaining cooling time and the spraying being continued until concluding the cooling.

3. Procedure of rapid cooling of packaged beverages according to claims 1 and 2 **characterized in that** the initial, cold solution and rinsing water temperatures are detected by thermal sensors and their values transferred to the CPU, the desired final temperature is introduced manually and the duration of the rinsing is a preset value.

4. Procedure of rapid cooling of beverages packaged according to claims 1, 2 and 3 **characterized in that** if the desired final temperature is less than 0° C the system will request the alcoholic content of the beverage to check the compatibility of the desired temperature with non-freezing and if the calculation indicates that freezing will take place the system will request the final temperature be modified or the alcoholic content changed.

5. Procedure of rapid cooling of packaged beverages according to claims 2 to 4 **characterized in that** if desired by the user the values of the final temperature, of the alcoholic content and of the temporal coefficient of the cooled packaged beverage are stored in a database in the memory of the CPU to obviate having to reintroduce or recalculate them whereby there will be no need for stoppages according to claim 2 when the cooling of a stored beverage is repeated, it being sufficient to simply introduce the code assigned to it.

6. Procedure of rapid cooling of packaged beverages according to claims 1 to 5 **characterized in that** the values corresponding to the last beverage are stored in a position without needing to assign a code thereto and permitting the use of its data in a simple manner for the following beverage.

7. Procedure of rapid cooling of packaged beverages according to claims 5 and 6 **characterized in that** when cooling a beverage whose data are stored it is possible to modify only the desired final temperature, storing or not the new value as decided by the user, the change of the final temperature not implying a new calculation of the temporal constant.

8. Procedure of rapid cooling of packaged beverages according to claim 2 **characterized in that** to achieve greater precision another stoppage will be made before reaching the end of cooling time, the temporal coefficient being recalculated again, following for this the process indicated in claim 2.

9. Procedure of rapid cooling of packaged beverages according to claims 2 and 8 **characterized in that** in the stoppages, the microprocessor will take temperature readings in a continuous manner with a preset time interval using an IR sensor on the outer wall of the container and it will calculate at three preset times the mean temperature of the last n readings received up to each time and with the three mean temperatures obtained it will calculate the equilibrium temperature of the beverage and its container in the stoppage, which will be applied for calculating the temporal coefficient.

10. Procedure of rapid cooling of packaged beverages according to claim 1 consisting in the timed spraying of a cooling liquid on containers of beverages to be chilled **characterized in that** it comprises the following phases:

   • Storing and cooling of the brine in a reservoir receptacle at a temperature between 0° C and -50° C,
   • Placement of at least one beverage container on a cooling tray,
   • Rotation of the container about its own axis,
   • Calculation of the spraying time,
   • Spraying brine on the container during at least one phase at a temperature below 0° C for the previously calculated time,
   • Stopping the spraying of the brine on the container,
   • Spraying of rinsing water on the cooled container for the removal of the brine during a preset time,
   • Stopping the rotation of the container and of the spraying of rinsing water,
   • Withdrawal of the cooled beverage container.

11. Procedure of rapid cooling of packaged beverages according to claim 10 **characterized in that** the brine is sprayed in such a way that the same glides on the container of the beverage to be cooled so that it coats the greater part of its surface including the lowest part at all times in the cooling.

12. Procedure of rapid cooling of packaged beverages according to claim 10 **characterized in that** the container rotates about itself in a single direction.

13. Procedure of rapid cooling of packaged beverages according to claim 10 **characterized in that** the rotation of the container about itself is done in alternating directions producing an appropriate level of turbulence inside the actual container without negatively affecting its contents.

14. Procedure of rapid cooling of packaged beverages according to claims 10 to 13 **characterized in that** the spraying of the brine on the beverage container to be cooled is carried out by a single jet which delivers the sufficient flow of brine for cooling the container and with this the beverage packaged in the same.

15. Procedure of rapid cooling of packaged beverages according to claim 10 **characterized in that** the spraying of the brine is carried out by means of multiple distributed jets on the surface of the container to be cooled.

16. Procedure of rapid cooling of packaged beverages according to claims 14 and 15 **characterized in that** the single or the multiple jets are located on the vertical plane which passes through the axis of the container to be cooled.

17. Procedure of rapid cooling of packaged beverages, according to claim 10 **characterized in that** the rinsing water is sprayed at ambient temperature or temperature of the supply system.

18. Procedure of rapid cooling of packaged beverages, according to claims 10 and 17 **characterized in that** the rinsing water is cooled prior to being sprayed on the container to be rinsed.

19. Procedure of rapid cooling of beverages packaged according to claims 1 to 10 **characterized in that** the microprocessor uses the following values for the calculations:

Preset values which are:

Kbase auxiliary temporal coefficient used for calculating the duration of the first spray phase.
Time between acquisition of temperature readings from the IR sensor during the stoppages
n number of readings in a burst
Time between the calculations of the three mean temperatures of n readings during the stoppages
Fixed time for non-presence of drips
Fixed time to empty brine from the enclosure and clear the discharge pipe including the three-way valve
Duration of the rinsing spray
Predefined value of final temperature
Predefined alcoholic content equal to zero.

Variable values which are:

Desired final temperature for the beverage
Initial temperature of the beverage acquired with IR sensor
Surface temperatures of the container acquired with IR sensor
Temperature of the brine acquired with sensor
Temperature of the rinsing water acquired with sensor
Alcoholic content of the beverage if the same were different from 0
Temporal coefficient.

20. Procedure of rapid cooling of packaged beverages according to claims 1 to 3, 5 to 9, 11 to 16 and 19 **characterized in that** by substituting the cooling liquid, usually brine, with hot liquid, which normally will be water at 80° to 90° C, the heating instead of the cooling of the packaged beverage is achieved.

21. Procedure of rapid cooling of beverages according claim 1 **characterized in that** the time of spraying the brine, as well as the rotation or not of the container is set in a manual manner.

22. Procedure of rapid cooling of beverages according to claims 1 and 21, **characterized in that** the spraying of the brine causes, depending on its duration the partial or total freezing of the beverage on which the brine is sprayed.

23. Procedure of rapid cooling of beverages according to claim 22, **characterized in that** by rotating the container during the spraying of the brine the freezing is produced starting from the wall of the container and ending on the axis of the same.

24. Rapid cooling of packaged beverages **characterised in that** it incorporates a coolant liquid reservoir (29) from which liquid is fed after the activation of a solenoid valve (39) through an outlet pipe (6) connected to a distribution pipe (1) from which the coolant liquid is sprayed on the one or more containers to be cooled so that when sprayed said cooling liquid is recovered through a return pipe (7) to the coolant liquid reservoir (29), this coolant liquid reservoir having coupled thereto a cold producing equipment.

25. Rapid cooling apparatus of packaged beverages according to claim 24, **characterized in that** the containers to be cooled are supported on integral projections (3) of two parallel axles (12) which are distributed uniformly rotating the container by the action of those projections (3) activated by at least one motor (11) linked to at least one of the axles (12), the projections (3) being separated from said axles (12) by sufficient space to allow the flow of the brine through said space achieving that the brine wets the entirety of the surface of the container.

26. Rapid cooling apparatus of packaged beverages according to claim 25, **characterized in that** the axle (12) consists of a worm screw.

27. Rapid cooling apparatus of packaged beverages according to claim 26 **characterized in that** the worm screw is divided into two threads in opposing directions.

28. Rapid cooling apparatus of packaged beverages according to claims 26 and 27 **characterized in that** the worm screw is rounded in profile.

29. Rapid cooling apparatus of packaged beverages according to claim 24, **characterized in that** the distribution pipe (1) has at least one orifice or outlet which delivers a sufficient flow rate of brine for cooling the packaged beverage covering most of the surface of the container.

30. Rapid cooling apparatus of packaged beverages according to claims 24 and 29, **characterized in that** the distribution pipe (1) has several orifices (82) or outlets made on the bottom from which issue jets (10) of cooling liquid sprayed on the containers.

31. Rapid cooling apparatus of packaged beverages according to claim 29 and 30, **characterized in that** the orifice or orifices (82) or outlets are located in a vertical plane proximate or coincident with the vertical plane which passes through the axis of the container.

32. Rapid cooling apparatus of packaged beverages, according to claim 24, **characterized in that** it incorporates an auxiliary tank (23) which contains cooling liquid (22) and which is mounted above to the reservoir receptacle of cooling liquid (29) to which it is connected through an auxiliary pipe with inclusion of a stopcock (24) to fill the cooling liquid receptacle (29) automatically as losses take place.

33. Rapid cooling apparatus of packaged beverages, according to claim 24, **characterized in that** the reservoir receptacle of cooling liquid (29) incorporates an overflow tube (66) which maintains the level of the brine, discharging the excess toward the drainage channel.

34. Rapid cooling apparatus of packaged beverages, according to claims 24 to 33, **characterized in that** it incorporates a pipe of rinsing water (2) in which is a solenoid valve (37) which is activated when the operation of cooling the container has concluded to open passage for the water which washes the container and removes the remains of cooling liquid from its surface, the water being discharged through a rinsing water drainage pipe (9).

35. Rapid cooling apparatus of packaged beverages according to claims 24 to 34, **characterized in that** the rinsing water pipe (2) ends proximate to the brine pipe (6) over the distribution pipe (1) from which the jets of water are sprayed toward the container (4-5-17).

36. Rapid cooling apparatus of packaged beverages according to claims 24 to 35, **characterized in that** the drainage discharges on a drainage filter (39) passing the liquid removed through a three-way valve (8) which selects the passing of liquid toward the rinsing drainage pipe (9) or toward the brine return pipe (7).

37. Rapid cooling apparatus of packaged beverages according to claims 24 to 36, **characterized in that** the cooling liquid receptacle (29) is located underneath the tray, in which case the apparatus incorporates a pump (31) activated by a motor (25) for driving the brine through the brine pipe (6) toward the distribution pipe (1) for its subsequent spraying on the containers (4-5 - 17).

38. Rapid cooling apparatus of packaged beverages according to claims 24 to 37 **characterized in that** the cooling liquid receptacle (29) is located above the tray, in which case the brine falls by gravitational effect on the containers to be chilled, the apparatus incorporating a pump (31) activated by a motor (25) for return of the brine through the brine pipe (6) toward the receptacle of the cooling liquid (29).

39. Rapid cooling of beverages packaged according to claims 24 to 38 **characterized in that** it incorporates several trays parallel to those which are accessed from above, incorporating in each of the trays a distribution pipe (1) on which ends its corresponding brine pipe (6) and rinsing water pipe (2), and also it comprises corresponding drainage pipes with three-way valves (8) connected to the rinsing drainage pipes (9) and to the return pipes (7) in correspondence with each tray, it having been foreseen that the pipes described are assembled in corresponding main ducts.

40. Rapid cooling apparatus of packaged beverages according to claims 24 to 39, **characterized in that** from the main duct from which the coolant pipes (6) leave, an auxiliary duct (19) runs connected to a pressure control valve (49) which discharges the brine impelled by the pump (31) toward to the receptacle (29) if a certain value of pressure is surpassed in said duct.

41. Rapid cooling apparatus of packaged beverages according to claims 24 to 40, **characterized in that** it incorporates an integral refrigeration unit (43).

42. Rapid cooling apparatus of packaged beverages according to claim 39, **characterized in that** it incorporates a folding protection (50) hinged on an axle (57) which covers the trays and the containers to avoid splashing outwards.

43. Rapid cooling apparatus of packaged beverages according to claim 42 **characterized in that** the hinge axle (57) of the protection coincides with the axle of the inlets of the rinsing water pipe (2) and of the coolant pipe (6) so that the spray tube can be integral with the protection.

44. Rapid cooling apparatus of packaged beverages according to claims 24 to 43 **characterized in that** it is part of a refrigerator module (21) contiguous with a freezer module (31), the refrigerator module (21) incorporating an insulating layer (27), as well as having a front opening (33) which gives access to a single tray covered or not by means of a folding lid (20), on which is located the container to be cooled.

45. Rapid cooling apparatus of packaged beverages according to claims 1 and 43, **characterized in that** it incorporates:

    - A microprocessor with a program for acquisition, storage and treatment of the variables which intervene in the calculation of the cooling time and controls the activation and operation time of the means of driving liquids and the motor for rotation of the containers, capturing signals from the:
    - Keyboard or touch screen;
    - Sensor (52) of the brine temperature in the reservoir;
    - Sensor of rinsing water temperature in the input pipe;
    - Sensor (53) of the brine temperature in spray tube;
    - Sensor (60) of the temperature of container to be cooled.

46. Rapid cooling apparatus of packaged beverages according to claim 45 **characterized in that** the temperature detector of the container to be cooled (60) consists of an infrared temperature sensor.

47. Rapid cooling apparatus of packaged beverages according to claim 45 **characterized in that** the temperature detector of the container to be cooled (60) consists of a thermograph camera.

48. Rapid cooling apparatus of packaged beverages according to claim 21 **characterized in that** for the cooling of containers which cannot be rotated an auxiliary recipient is foreseen with one or more bottom outlets to remove the brine at a slower rate than that of the incoming brine from the spray jets.

49. Rapid cooling apparatus of packaged beverages according to claims 24 to 48 **characterized in that** the auxiliary recipient has an upper cover by way of a grating through which the brine can pass retaining the products to be cooled inside the auxiliary recipient.

50. Rapid cooling apparatus of packaged beverages according to claims 24 and 48 to 49 **characterized in that** the auxiliary recipient is divided internally into compartments which are horizontal and/or vertical or in any other direction, to contain foodstuffs in bags for freezing.

51. Rapid cooling apparatus of packaged beverages according to claim 24 **characterized in that** for freezing liquids in the production of domestic ice creams or even crushed-ice beverages the incorporation is foreseen of a recipient inside which is an element for stirring the product to be frozen which receives outwardly over all its surface the coolant brine shower, the stirrer being power driven through an auxiliary output of the movement produced by the motor which drives the rollers.

**52.** Rapid cooling apparatus of packaged beverages according to claim 24 **characterized in that** for the freezing of packaged beverages the cooling time will be set manually indicating likewise if the container is to be rotated during the process.

**53.** Rapid cooling apparatus of packaged beverages according to claim 50 **characterized in that** for the freezing of foodstuffs in bags the cooling time will be set manually.

**FIG. 1**

6    2

1

4

5

3    3

12    3

# FIG. 2

*FIG. 3*

EP 1 662 218 A1

FIG. 4

EP 1 662 218 A1

*FIG. 5*

*FIG. 6*

EP 1 662 218 A1

FIG. 7

28

**FIG. 8**

*FIG. 8 bis*

FIG. 9

*FIG. 10*

FIG. 11

*FIG. 12*

**FIG. 13**

**FIG. 14**

*FIG. 15*

34
21
1
4
35
33 *FIG. 16*

5

FIG. 17

FIG. 18

**FIG. 19**

*FIG. 20*

**FIG. 21**

FIG. 22

FIG. 23

**FIG. 23 bis**

**FIG. 24**

84

85

86

*FIG. 25*

*FIG. 26*

BRINE TO -40° C
BRINE TO -30° C
BRINE TO -20° C
WATER TO 0°
PROPYLENGLICOL 60% TO -24° C

*FIG. 27*

*FIG. 28*

EP 1 662 218 A1

FIG. 29

FIG. 30

EP 1 662 218 A1

FIG. 31

EP 1 662 218 A1

## SOLUBILITY LIMITS

Transition point A

Mass fraction 0.2985
Temperatura -54.23 ºC

Ice

$CL_2Ca$-$6H_2O$

A

Mass fraction $CL_2Ca$

# FIG. 32

<div align="center">

**INTERNATIONAL SEARCH REPORT**

</div>

| International application No. |
| --- |
| PCT/ ES 2004/000332 |

| A. CLASSIFICATION OF SUBJECT MATTER |
| --- |
| CIP⁷ F25D31/00, A23L3/36, 2/42 |
| According to International Patent Classification (IPC) or to both national classification and IPC |

| B. FIELDS SEARCHED |
| --- |
| Minimum documentation searched (classification system followed by classification symbols) |
| CIP⁷ F25D, A23L, F25B, F28D |
| Documentation searched other than minimum documentation to the extent that such documents are included in the fields searched |
| Electronic data base consulted during the international search (name of data base and, where practicable, search terms used) |
| CIBEPAT,EPODOC |

C. DOCUMENTS CONSIDERED TO BE RELEVANT

| Category* | Citation of document, with indication, where appropriate, of the relevant passages | Relevant to claim No. |
| --- | --- | --- |
| X | WO9711327 A (SIDEBOTHAM GEORGE et al) 27.03.1997, page 4, line 4 - page 5, line 11; page 6, line 26- page 7, line 16. | 24-31 |
| A | | 1-23, 32-53 |
| A | US2002124576 A (SIDEBOTHAM GEORGE et al) 12.09.2002, the whole document | 1-53 |
| A | GB2359065 A (IMI CORNELIUS) 15.08.2001, the whole document | 1-53 |
| A | US4304105 (WEST CLINTON) 08.12.1981, column 7, line 56- column 8, line 5. | 1-10, 45 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| **11 November 2004 (11/11/04)** | **19 November 2004 (19/11/04)** |

| Name and mailing address of the ISA/ **S.P.T.O.** C/Panamá 1, 28071 Madrid, España. | Authorized officer J. A. Celemín Ortiz-Villajos |
| --- | --- |
| Facsimile No. 34 91 3495304 | Telephone No. 34 91 349 5493 |

Form PCT/ISA/210 (second sheet) (July 1992)

**INTERNATIONAL SEARCH REPORT**
Information on patent family members

International Application No
PCT/ ES 2004/000332

| Patent document cited in search report | Publication date | Patent familiy member(s) | Publication date |
|---|---|---|---|
| WO 9711327 A | 27.03.1997 | US 5505054 A<br>AU 3595195 A | 09.04.1996<br>09.04.1997 |
| US 2002124576 A | 12.09.2002 | CA 2440032 A<br>WO 02070970 A<br>EP 20020748381<br>US 6662574 B<br>US 2004112069 A | 12.09.2002<br>12.09.2002<br>01.03.2002<br>16.12.2003<br>17.06.2004<br>17.06.2004 |
| GB2359065 A B | 15.08.2001 | NONE | ------------ |
| US4304105 A | 08.12.1981 | NONE | ------------ |